(19) Europäisches Patentamt
European Patent Office
Office européen des brevets

(11) EP 2 868 685 A1

(12) EUROPÄISCHE PATENTANMELDUNG

(43) Veröffentlichungstag:
**06.05.2015 Patentblatt 2015/19**

(51) Int Cl.:
***C08J 3/12*** *(2006.01)* ***C08J 3/14*** *(2006.01)*
***C08G 73/00*** *(2006.01)* ***C08G 73/10*** *(2006.01)*

(21) Anmeldenummer: **14191602.3**

(22) Anmeldetag: **04.11.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **05.11.2013 EP 13191510**

(71) Anmelder: **Evonik Fibres GmbH**
**4861 Schörfling am Attersee (AT)**

(72) Erfinder:
- **Ungerank, Markus**
  **4320 Perg (AT)**
- **Guldt, Jens Dieter**
  **4863 Seewalchen am Attersee (AT)**
- **Eder, Jürgen**
  **4880 St. Georgen im Attergau (AT)**

(74) Vertreter: **Wolf, Oliver**
**Evonik Industries AG**
**CI-IPM-PAT**
**Postcode 84/339**
**Rodenbacher Chaussee 4**
**63457 Hanau (DE)**

# (54) Verfahren zur Herstellung von Polymerpulver

(57) Gegenstand der vorliegenden Erfindung ist ein Verfahren zur Herstellung von pulverförmigen Polymeren.

EP 2 868 685 A1

## Beschreibung

Gegenstand der vorliegenden Erfindung ist ein Verfahren zur Herstellung von pulverförmigen Polymeren.

Polymere, insbesondere Polyimide, werden für viele Anwendungen in Pulverform benötigt. So werden z. B. Polyimide für vielerlei Anwendungen eingesetzt, insbesondere zur Herstellung von Phaseninversionsmembranen, Fasern für Heißgasfilter, Beschichtungen im Elektronikbereich und anderen Anwendungen bei denen eine hohe Temperaturbeständigkeit eine Rolle spielt. Dazu werden in der Regel aus Polyimidpulver entsprechende Bauteile hergestellt. Neben mit PTFE oder Graphit gefüllten Polyimidbauteilen wird Polyimidpulver auch als Füllstoff in PTFE Compounds eingesetzt und ist dort Stand der Technik zur Reduzierung des Kriechverhaltens des PTFEs bei hohen Temperaturen.

Die wirtschaftliche Herstellung von pulverförmigem Polyimid stellt eine besondere Herausforderung dar. Daher hat es bislang nicht an Versuchen gemangelt entsprechende Verfahren zu entwickeln.

In der WO 2012096374, der JP 2001-163973, der JP 2006-124530 und der JP 2011-162570 werden Verfahren zum Recycling von Polyimidabfällen offenbart, wobei das Polyimid mit einer Alkalilauge aufgelöst und anschließend durch Zugabe einer Säure wieder ausgefällt und das Pulver isoliert wird. Beim Auflösevorgang wird das Polyimid teilweise hydrolysiert, was - wegen des dadurch bedingten Abbaus der Molmasse - negative Auswirkungen auf die Materialeigenschaften haben kann.

In der US 4464489 wird ein Verfahren beschrieben, bei dem eine Tetracarbonsäure und ein Polyisocyanat in Gegenwart eines Katalysators umgesetzt werden und unmittelbar ein Pulver ausfällt. Dieses Verfahren hat sich wirtschaftlich nicht durchgesetzt.

Die US 20120245239 offenbart ein Verfahren, bei dem zu einer Polyimidlösung unter starker Scherung ein Nichtlösungsmittel, d.h. eine Flüssigkeit in der sich das Polymer nicht löst, zugegeben wird bis sich eine Emulsion, d.h. eine Flüssig/Flüssig-Mischung, bildet. Aus dieser Emulsion wird das Lösungs- und das Nichtlösungsmittel abgezogen und ein feinteiliges Pulver erhalten. Es wird also keine Fällung bis zum Erhalt einer Suspension, d.h. einer Fest in Flüssig Mischung, sondern eine Eintrocknung einer Emulsion durchgeführt. Um dies zu ermöglichen, muss die Emulsion in der US'239 mittels Zugabe eines Benetzungsmittels stabilisiert werden, was einen erhöhten Aufwand nach sich zieht und Verunreinigungen ins Produkt einbringt. Zudem ist der Prozess aus der US'239 hinsichtlich der Partikelgröße der damit herstellbaren Partikel stark limitiert (Minimum 75 $\mu$m). Kleiner staubfreie Partikel können nicht erhalten werden.

In der EP 2345687, siehe z. B. Beispiel 1, wird ein Prozess zur Herstellung von Polymerpulver beschrieben, bei dem ein Polymer gelöst wird, anschließend wird diese Polymerlösung kontinuierlich mit einem Nichtlösungsmittel gemischt, bis sich eine Emulsion bildet. Diese wird dann durch ein spezielles Rohr gepumpt, in dem das Lösungsmittel von den Emulsionstropfen abgezogen wird und sich dabei Polymerpartikel bilden. Das Verfahren ähnelt also dem der US'239, d.h. es wird eine Emulsion gebildet und daraus das Lösungsmittel abgezogen. Das hier beschriebene Verfahren ist auf Grund der Apparatur jedoch noch spezifischer und teurer und daher kommerziell nicht zu gebrauchen.

In der EP 2623542 wird in eine Lösung eines auszufällenden Polymers A ein zweites Polymer B zugegeben um dadurch eine Emulsion der beiden Polymere zu bilden. Die Emulsion besteht also aus einem Gemisch aus Tröpfchen zweier unterschiedlicher Polymere. Zu dieser Emulsion wird dann ein Nichtlösungsmittel gegeben um Polymer A auszufällen. Dieses Verfahren ist sehr aufwendig und ökologisch nicht sinnvoll, da ein zweites Polymer B als Hilfsstoff benötigt wird. Analoges gilt für das in der EP 2287236 offenbarte Verfahren.

In der US 4089843 wird ein Verfahren beschrieben, bei dem

a) eine Polymerlösung hergestellt wird
b) aus der Polymerlösung und einem Mineralöl eine Emulsion hergestellt wird
c) zu dieser Emulsion ein Nicht-Lösungsmittel zugegeben wird und dadurch das Polymer erhalten wird.

Dieses Verfahren weist, wie die zuvor diskutierte EP 2623542, den Nachteil auf, dass mit dem Mineralöl ein zweites Polymer als Hilfsstoff zur Herstellung der Emulsion verwendet werden muss.

In der EP 2502952, siehe Anspruch 1 und die Beispiele 14 bis 16 wird ein Verfahren zur Herstellung von Polymerpulvern offenbart, in dem das Polymer in einem Lösungsmitte gelöst und danach die Polymerlösung unter Rühren in ein Nicht-Lösungsmittel gegeben wird. Das Verfahren hat den Nachteil, dass die Konzentration des Polymers im Lösungsmittel maximal 5 Gew. % betragen darf, da ansonsten "bulky particles" oder "bulky materials" erhalten werden. Um höhere Feststoffgehalte bis max. 10 Gew. % realisieren zu können, muss in der EP'952 eine "Flash Crystallisation" in einem Autoclaven bei hohem Druck und hohen Temperaturen durchgeführt werden. Beide Verfahren sind nicht wirtschaftlich.

J.Y. Xiong et al, "Surfactant free fabrication of polyimide nanoparticles", Appl. Phys. Lett., Vol. 85, No. 23, 5733 - 5735, offenbaren ein Verfahren in dem Polyimide in NMP aufgelöst und durch Zugabe eines Nicht-Lösungsmittels lagerstabile Nanopartikelsuspensionen hergestellt werden. Ziel ist es stabile Suspensionen herzustellen, was dadurch erreicht wird, dass die Partikel mit einer Solvathülle umgeben werden, die die Suspension stabilisiert und gerade verhindert, dass die Nanopartikel ausfallen. Es gibt keinen Hinweis darauf, ob und wenn ja, wie aus den Suspensionen

Pulver isoliert werden können, ohne dass es zu Aggregation oder Verklumpungen kommt. Da die Solvathülle ja gerade ein Zusammenbacken verhindern soll, ist zu erwarten, dass es bei Entfernung der Solvathülle zu entsprechenden Verklumpungen kommt. Die Partikel weisen zudem nur Partikelgrößen im Nanometerbereich auf. Somit wird hier keine Lösung für die erfindungsgemäße Aufgabe geliefert.

Die US 2002/0022673, siehe Beispiele und Abbildungen 2a bis 2f, offenbart ein Verfahren bei dem zunächst ein Polymerpulver A mit einem "löslichen" 2. Pulver vermischt wird. Danach wird zu dieser Mischung ein Lösungsmittel für Polymer A zugegeben um die Oberfläche der Polymerpartikel anzulösen, d.h. nicht die Partikel aufzulösen. Durch Anlegen eines Vakuums "schmelzen" die Polymerpartikel mit deren angelöster Oberfläche zusammen. Danach wird das lösliche 2. Pulver mit Wasser ausgewaschen und gleichzeitig die angelöste Oberfläche der Polymerpartikel wieder ausgefällt. Dadurch erhält man einen porösen Polyerblock (siehe US'673, Fig. 2f). Es handelt sich also nicht um ein Verfahren zur Herstellung eines Polymerpulvers.

In der EP 0336 995, der JP 2007-112926, der JP 2006-233023, der US 20060039984 und der JP 04-272934 werden Verfahren zur Herstellung unlöslicher Polyimidpulver offenbart. Darin wird jeweils zunächst eine Polyamidsäurelösung hergestellt. Durch Zugabe eines Nicht-Lösungsmittels wird die Polyamidsäure ausgefällt und danach vom Lösungs- und Nicht-Lösungsmittel befreit. Die so erhaltene Polyamidsäure muss danach einem separaten Imidisierungsschritt, i.d.R. einer Temperung bei hohen Temperaturen, unterzogen werden um ein Polyimid zu erhalten. Während der Imidisierung backen die Polyamidsäurepartikel zusammen, so dass das Polyimid am Ende wieder vermahlen werden muss um ein Polyimidpulver zu erhalten. Diese Verfahren sind somit ebenfalls sehr umständlich und eignen sich nicht zur Lösung der Aufgabe der vorliegenden Erfindung.

Wie die zuvor erfolgte Auflistung des Standes der Technik zeigt, hat es in den letzten 30 Jahren nicht an Versuchen gemangelt Polyimidpulver auf verschiedensten Wegen herzustellen. Keines der genannten Verfahren hat irgendeine kommerzielle Relevanz erlangt.

Stattdessen hat sich in der Praxis daher insbesondere für Polyimide aus der P84® Familie ein Verfahren nach EP 0279807 durchgesetzt, bei dem in einem ersten Schritt aus einer P84 Polykondensationslösung über eine spezielle 2-Stoffdüse mit Wasser versponnen wird. Es entstehen sogenannte Fibride die 10 bis 15 mm groß sind. Die Fibride werden abgetrennt und in mehreren Waschschritten aufwendig gereinigt, um das DMF aus den Fibriden herauszuwaschen. Die Auswaschung ist möglich, weil die Fibride eine poröse membranartige Struktur haben, die beim Spinnprozeß entsteht und so das DMF herausgewaschen werden kann. Nach dem Auswaschen des DMF erfolgt eine Trocknung. Die getrockneten Fibride werden schließlich noch gemahlen, um die für diverse Anwendungen notwendigen Korngrößen bereitstellen zu können. Das so erhaltene P84 Pulver ist recht hart und kann mit herkömmlichen Prallmühlen nicht ohne weiteres Vermahlen werden. Der Aufwand ist umso größer je feiner das Pulver sein soll. Daher ist auch kommerziell bei einer Korngröße von ca. 1200 mesh (10 bis 15 μ) Schluss. Feinere Pulver sind bislang nicht kommerziell darstellbar. Die Pulver müssen zudem nach dem Mahlen noch aufwändig gesichtet und gesiebt werden, um die passenden Fraktionen zu erhalten. Feinanteile aus dem Mahlprozess werden entweder nicht abgetrennt und verbleiben im Pulver oder es entsteht eine feine Fraktion die als Abfall entsorgt werden muss und die Ausbeute vermindert. Feinanteile im Produkt wirken oft störend in der Anwendung, da sie Staub bei der Handhabung verursachen, ungewünschte Produkteigenschaften herbeiführen können und schlechte Rieseleigenschaften des Pulvers verursachen.

Durch den Mahlprozess bedingt sind die Korngrößenverteilungen der Mahlpulver oft sehr breit und uneinheitlich. Auch die Partikelmorphologie ist nicht einheitlich. Ferner kommt es durch die Härte des Materials zu nicht unerheblichem Metallabrieb, ein Problem, welches auch in den oben genannten japanischen Schutzrechten zum Polyimidrecycling angesprochen wird.

Es besteht daher nach wie vor ein großer Bedarf an einem wirtschaftlichen Verfahren um Polyimidpulver herzustellen. Idealer Weise sollte dieses Verfahren auch auf andere Polymere anwendbar sein.

Aufgabe der vorliegenden Erfindung war es daher ein Verfahren zur Verfügung zu stellen, welches die Nachteile der Verfahren des Standes der Technik nicht oder nur in verringertem Maße aufweist.

Eine spezielle Aufgabe bestand darin ein vereinfachtes Verfahren bereitzustellen, das ohne Mahlprozesse auskommt.

Eine weitere spezielle Aufgabe bestand darin ein Verfahren zur Verfügung zu stellen, das es ermöglicht Polymerpulver, insbesondere aber nicht nur Polyimidpulver, mit einer spezifizierten Korngrößenverteilung und/oder einheitlichen Partikelmorphologie, ohne aufwendiges Sieben, Sichten und Fraktionieren, reproduzierbar herzustellen.

Ebenfalls als besondere Aufgabe war vorhanden ein Verfahren zu entwickeln, mit dem die Partikelgröße des Pulvers frei einstellbar und reproduzierbar ist. Insbesondere sollte es auch möglich sein auf diese Weise kleinere Partikel als mit dem oben beschriebenen kommerziell angewendeten Verfahren ökonomisch herzustellen. Idealer Weise sollten die erhaltenen Pulver frei sein von Feinanteilen, ein gutes Rieselverhalten haben und möglichst hohe Schüttdichten aufweisen.

Ebenfalls Aufgabe der vorliegenden Erfindung war es ein Verfahren bereitzustellen, das in möglichst viele kommerziell angewendete Verfahren zur Herstellung von Polymeren, insbesondere von Polyimiden und Polyamidimiden, integrierbar ist, ganz speziell in

- die Herstellung von Polyimiden und Polyamidimiden durch die Umsetzung von aromatischen Tertacarbonsäuredianhydriden oder Trimellithsäureanhydrid mit aromatischen Diisocyanaten,
- die Herstellung von Polyimiden, die nach einem thermischen oder chemischen Imidisierungsverfahren einer Polyamidsäure, hergestellt bevorzugt aus einer aromatischen Tetracarbonsäure und einem aromatischen Diamin, hergestellt worden sind,
- die Herstellung von Polyimiden, die generell bei der Herstellung in Lösung bleiben und nicht ausfallen
- die Herstellung von löslichen Polyimiden, die nach einer speziellen Herstellprozedur wiederaufgelöst werden können.

Weitere nicht explizit genannte Aufgaben ergeben sich aus dem Gesamtzusammenhang der nachfolgenden Beschreibung, Beispiele und Ansprüche.

Bevor die Erfindung im Detail beschrieben wird, sollen zunächst einige wichtige Begriffe definiert werden.

Die Begriffe "Partikel" und "Korn" werden im Rahmen der vorliegenden Erfindung synonym verwendet.

**"Nichtlösungsmittel"** bezeichnet eine Flüssigkeit oder ein Flüssigkeitsgemisch, in der das zum Pulver zu verarbeitende Polymer bei 23 °C und Atmosphärendruck nicht oder nur zu einem sehr geringen Anteil, d.h. < 5 Gew. %, bevorzugt < 3 Gew. %, besonders bevorzugt < 2 Gew. % und ganz besonders bevorzugt < 1 Gew. % löslich ist. Bevorzugt wird mindestens ein Nichtlösungsmittel verwendet, das mit dem Lösungsmittel bei 23°C und Atmosphärendruck vollständig mischbar über einen weiten Bereich des Mischungsverhältnisses, ganz besonders bevorzugt vollständig mischbar in allen Mischungsverhältnissen ist. Bevorzugt beträgt der Anteil an Nichtlösungsmitteln bzw. Nichtlösungsmittelgemischen, die mit dem Lösungsmittel wie zuvor beschrieben mischbar sind, an der Gesamtmenge der im erfindungsgemäßen Verfahren verwendeten Nichtlösungsmittel bzw. Nichtlösungsmittelgemischen 50 bis 100 Gew.%; besonders bevorzugt 70 bis 100 Gew.%, ganz besonders bevorzugt 80 bis 100 Gew. %, speziell bevorzugt 90 bis 100 Gew. %, ganz speziell bevorzugt 95 bis 100 Gew. %. In der am meisten bevorzugten Ausführungsform werden ausschließlich wie oben beschrieben mit dem Lösungsmittel mischbare Nichtlösungsmitteln bzw. Nichtlösungsmittelgemische verwendet.

**"Lösungsmittel"** bezeichnet eine Flüssigkeit in der das zum Pulver zu verarbeitende Polymer bei 23 °C vollständig gelöst werden kann.

Als **"Polymerlösung"** wird die in Schritt a) des erfindungsgemäßen Verfahrens hergestellt Lösung mindestens eines Polymeren bezeichnet, zu der das Nichtlösungsmittel bzw. das Gemisch aus einem Lösungsmittel und einem Nichtlösungsmittel in Schritt b) des erfindungsgemäßen Verfahrens zugegeben wird.

Die Polymerlösung kann der Lösung entsprechen, welche während des Herstellungsprozesses eines Polymers erhalten wird, bevorzugt am, Ende einer Polykondensation, besonders bevorzugt am Ende einer Polykondensation nach einem der weiter oben beschriebenen Verfahren, ganz besonders bevorzugt nach einer Umsetzung eines Tetracarbonsäuredianhydrides und eines Diisocyanats. Es kann sich aber auch um eine Lösung handeln, die durch Auflösen eines löslichen, bevorzugt durch Polykondensation erhaltenen, Polymers erhalten wird.

Die Polymerlösung kann in weiteren Verfahrensschritten bearbeitet werden bevor Schritt b) durchgeführt wird. Bevorzugte Beispiele für solche Verfahrensschritte sind Verdünnen, Filtrieren, Aufkonzentrieren, Lösungsmittelaustausch, Zusatz von Additiven etc. Details hierzu, sowie zu weiteren Möglichkeiten zur Herstellung der Polymerlösung werden weiter unten erläutert.

Die Erfinder haben überraschend herausgefunden, dass es möglich ist aus einer Polymerlösung durch Zugabe eines Nichtlösungsmittels bzw. eines Gemisches aus mindestens einem Nichtlösungsmittel und mindestens einem Lösungsmittel, wobei bevorzugt mindestens ein Nichtlösungsmittel wie oben beschrieben mit dem Lösungsmittel oder dem Lösungsmittelgemisch der Polymerlösung vollständig mischbar ist, unter Einwirkung von Stabilisierungsenergie, bevorzugt Scherenergie, eine Suspension zu erhalten, aus der schließlich ein Polymer mit definierter und wenn gewünscht enger Partikelgrößenverteilung sowie mit einstellbarer mittlerer Partikelgröße erhalten werden kann.

Das erfindungsgemäße Verfahren zeichnet sich dadurch aus, dass sich bei Zugabe des Nichtlösungsmittels zunächst eine Emulsion bildet, welche durch eine Phasenseparation aus der homogenen Phase gebildet wird. Es entsteht eine Mischungslücke, die zwei Phasen hervorbringt. Eine Phase ist gekennzeichnet durch einen hohen Feststoffgehalt an Polymer mit Lösungsmittel und wenig Nichtlösungsmittel, die zweite Phase ist die verdünnte Phase mit geringem Feststoffgehalt, niedrigerem Lösungsmittelanteil und höherem Nichtlösungsmittelanteil. Ohne Einwirkung von Stabilisierungsenergie, bevorzugt Scherenergie, würde die Emulsion in sich zusammenfallen und eine kaugummiartige Masse bilden, die kein wohl definiertes Pulver ergeben würde.

Die US 20120245239 verwendet im Gegensatz zum erfindungsgemäßen Verfahren nur Fällmittel (nicht mischbare Nichtlösungsmittel), die nicht mit den Lösungsmitteln der Polymerlösung mischbar sind, um ein 2 Phasengebiet zu erhalten. Das Verfahren gemäß US 20120245239 ist daher nur mit speziellen Lösungsmitteln durchführbar, sehr aufwendig und wenig ökologisch.

Im erfindungsgemäßen Verfahren wird nach der Bildung der Emulsion - im Gegensatz zur US 20120245239 - weiter Nichtlösungsmittel bzw. ein Gemisch aus Nichtlösungsmittel und Lösungsmittel zugegeben, bis sich eine Suspension bildet. Aus dieser kann mit einfachen Mittel das Polymerpulver isoliert werden. Es kann im Vergleich zur US

20120245239 eine größere Zahl an Nichtlösungsmitteln verwendet werden. Das erfindungsgemäße Verfahren ist somit variabler, weniger aufwändig und ökologischer.

Die Partikelgrößenverteilung und die mittlere Partikelgröße können im erfindungsgemäßen Verfahren durch verschiedene Parameter, bevorzugt durch den Feststoffgehalt und/oder den pH-Wert der Polymerlösung eingestellt werden. Daher ist das erfindungsgemäße Verfahren sehr variabel und es kann auf eine Vermahlung sowie die aufwendige Sichtung verzichtet werden.

Das erfindungsgemäße Verfahren umfasst die folgenden Schritte

a) Herstellen einer Polymerlösung umfassend zumindest ein in einem Lösungsmittel lösliches Polymer oder Gemisch mehrere Polymere, jeweils ausgewählt aus der Gruppe bestehend aus Polyimide, Polyetherimide, Polyamidimide und Polyamide, und zumindest ein Lösungsmittel
b) Zugabe mindestens eines Nichtlösungsmittels bzw. eines Gemisches aus mindestens einem Nichtlösungsmittel und mindestens einem Lösungsmittel unter Einwirkung von Stabilisierungsenergie, bevorzugt Scherenergie, zur Lösung aus Schritt a) bis sich eine Suspension bildet,
c) Optional Reduktion des Lösungsmittelgehalts in der Flüssigphase der Suspension
d) Abtrennen des Pulvers von der Flüssigphase der nach Schritt b) oder c) erhaltenen Suspension
e) Optional trocknen des Pulvers

Unter Stabilisierungsenergie wird im Rahmen der vorliegenden Erfindung der Eintrag von Energie, während der Fällung in Schritt b) bzw. ggf. auch schon zuvor, z.B. bei der Herstellung der Lösung in Schritt a), in das Reaktionsgemisch verstanden, wobei die Stabilisierungsenergie, bevorzugt handelt es sich um Scherenergie, derart groß ist, dass eine Koagulation der in Schritt b) intermediär entstehenden Emulsion vermeiden und diese somit stabilisiert wird. Dies ermöglicht die Bildung einer Suspension von feinen Partikeln aus der stabilisierten Emulsion durch weitere Zugabe von Nichtlösungsmittel, d.h. durch Fällung.

Bei der Polymerlösung in Schritt a) handelt es sich entweder um eine Lösung, welche durch Wiederauflösen eines, bevorzugt durch Polykondensation erhaltenen, Polymers oder direkt aus dem Herstellungsverfahren eines, bevorzugt durch Polykondensation erhaltenen, Polymers erhalten wird,
oder
es handelt sich bei der Polymerlösung um die zuvor definierte Polymerlösung nachdem sie in mindestens einem weiteren Verfahrensschritt modifiziert wurde. In diesem Fall umfasst das erfindungsgemäße Verfahren mindestens einen Verfahrensschritt a1) "Modifizieren der Polymerlösung", welcher besonders bevorzugt mindestens einen der nachfolgenden Schritte umfasst:

a1.1) Verdünnen der Polymerlösung mit dem bei der Polymerherstellung, bevorzugt der Polykondensation, verwendeten Lösungsmittel oder einem anderen vollständig mischbaren Lösungsmittel
a1.2) Verdünnen der Polymerlösung mit einem vollständig mischbaren Nichtlösungsmittel, wobei bevorzugt bis zu 20% Nichtlösemittel zugemischt werden, sodass noch kein Ausfällen des Polymeren stattfindet
a1.3) Filtrieren zur Abtrennung von Feststoffen aus der Polymerlösung a1.4) Aufkonzentrieren der Polymerlösung
a1.5) Zugabe eines Polymers oder Additivs, das sich in der Polymerlösung löst
a1.6) Zugabe von pulverförmigen Additiven, die sich in der Polymerlösung nicht lösen und in dieser suspendieren bzw. dispergieren lassen
a1.7) Teilweiser oder vollständiger Austausch des Lösungsmittels, durch ein mit dem Lösungs- und/oder Nichtlösungsmittel mischbaren Lösungsmittel oder Gemisch aus Lösungsmittel- und Nichtlösungsmittel, so dass noch kein Ausfällen des Polymeren stattfindet.

Die Maßnahmen von Schritt a1) beeinflussen das Fällverhalten und die daraus resultierende Korngröße, die Partikelform und die Korngrößenverteilung.

In einer besonders bevorzugten Ausführungsform umfasst Schritt a) des erfindungsgemäßen Verfahrens mindestens einen der folgenden Teilschritte:

a2) Homogenisieren der Polymerlösung, bevorzugt durch Einbringen von Scherenergie
a3) Einstellung der Temperatur der Polymerlösung
a4) Einstellung des pH-Wertes der Polymerlösung
a5) Einstellung des Feststoffgehalts der Polymerlösung

Geeignete Polymere im Sinne der Erfindung sind alle Polymere, die in organischen Lösungsmitteln löslich sind und prinzipiell bei Zugabe eines Nichtlösungsmittels eine feste Phase bilden. Bevorzugt werden lösliche Vertreter der Polymerklassen ausgewählt aus der Gruppe bestehend aus Polyimide, Polyetherimide, Polyamidimide und Polyamide,

oder Gemische davon mit dem erfindungsgemäße Verfahren in Pulver überführt. Besonders bevorzugt werden Polyimide, Polyetherimide, Polyamidimide und ganz besonders bevorzugt Polyimide oder Polyamidimide verwendet.

Besonders bevorzugte Polyimide bzw. Polyamidimide können erhalten werden durch Polykondensation mindestens eines aromatischen Tetracarbonsäure(di)anhydrids bzw. einer aromatischen Tricarbonsäure, bevorzugt ausgewählt aus der Gruppe bestehend aus 3,4,3',4'-Benzophenontetra-carbonsäuredianhydrid, 1,2,4,5-Benzoltetracarbon-säuredianhydrid, 3,4,3'4'-Biphenyltetracarbonsäuredianhydrid, Oxydiphthalsäure-dianhydrid, Sulfonyldiphthalsäuredianhydrid, und 1,1,1,3,3,3-Hexafluor-2,2-propylidendiphthalsäure-dianhydrid, 1,3,4-Benzoltricarbonsäure

und

mindestens einem aromatischen Diisocyanat, bevorzugt ausgewählt aus der Gruppe bestehend aus Toluol-2,4-diisocyanat, Toluol-2,6-diisocyanat, 4,4'-Methylendiphenyl-diisocyanat, 2,4,6-Trimethyl-1,3-phenylendi-isocyanat, 2,3,4,5-Tetramethyl-1,4-phenylendi-isocyanat

oder

durch Umsetzung mindestens eines Tetracarbonsäure(di)anhydrids, bevorzugt ausgewählt aus der Gruppe bestehend aus 3,4,3',4'-Benzophenontetra-carbonsäuredianhydrid, 1,2,4,5-Benzoltetracarbon-säuredianhydrid, 3,4,3'4'-Biphenyltetracarbon-säuredianhydrid, Oxydiphthalsäuredianhydrid, Sulfonyldiphthalsäuredianhydrid, und 1,1,1,3,3,3-Hexafluor-2,2-propylidendiphthalsäure-dianhydrid, 4,4 ' - (4,4 ' - Isopropylidenediphenoxy) Bis (Phthalsäureanhydrid);

und

mindestens einem Diamin, bevorzugt ausgewählt aus der Gruppe, bestehend aus 2,4-Diaminotoluol, 2,6-Diaminotoluol, 4,4'-Diaminodiphenylmethan, 2,4,6-Trimethyl-1,3-phenylendiamin, 2,3,4,5-Tetramethyl-1,4-phenylendiamin, Bis(4-Amino-3,5-dimethyl-phenyl)methan, Bis(4-Amino-3-methyl-phenyl)methan, 1,3-Phenylendiamin, 1,4-phenylendiamin, 4,4'-Diaminodiphenylether, 5(6)-amino-1-(4' aminophenyl)-1,3,-trimethylindane, und anschließender Imidisierung der Polyamidsäure.

Ganz besonders bevorzugte Polyimide umfassen

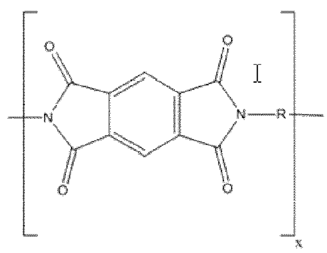

(A)

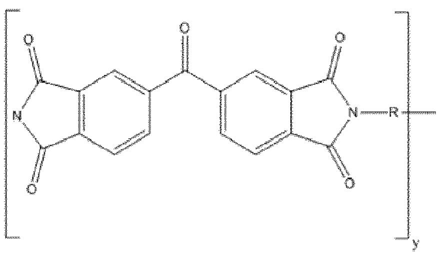

(B)

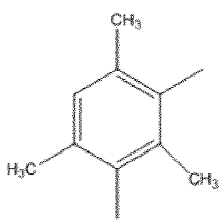

(L1)

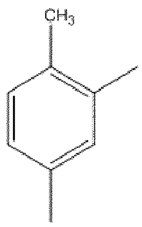

(L2)

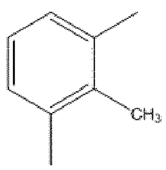

(L3)

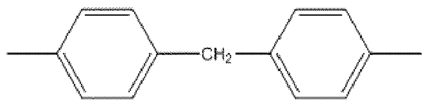

(L4)

wobei 0 ≤ x ≤ 0,5 und 1 ≥ y ≥ 0,5 und R einem oder mehreren, identischen oder unterschiedlichen Resten, ausgewählt aus der Gruppe bestehend aus L1, L2, L3 und L4, entspricht.

Besonders bevorzugt betragen x = 0, y = 1 und R besteht zu 64 mol % aus L2, zu 16 mol % aus L3 und zu 20 mol % aus L4. Dieses Polymer ist kommerziell unter dem Namen P84 oder P84 Typ 70 von Evonik Fibres erhältlich und ist unter CAS-Nummer: 9046-51-9 registriert. Bei einem weiteren besonders bevorzugten Polymer betragen x = 0,4, y = 0,6 und R besteht zu 80 mol % aus L2 und zu 20 mol % aus L3. Dieses Polymer ist kommerziell erhältlich als P84HT von Evonik Fibres und ist unter der CAS-Nummer: 134119-41-8 registriert.

Ganz besonders bevorzugte Polyimide können gemäß WO 2011/009919 hergestellt werden. Der Inhalt dieser Anmeldung wird zur Vermeidung reiner Wiederholungen vollumfänglich in den Umfang der Beschreibung der vorliegenden Anmeldung aufgenommen.

Ein weiteres bevorzugtes Polyimid ist Matrimid 5218, kommerziell erhältlich von Huntsman Advanced Materials mit nachfolgender chemischer Struktur.

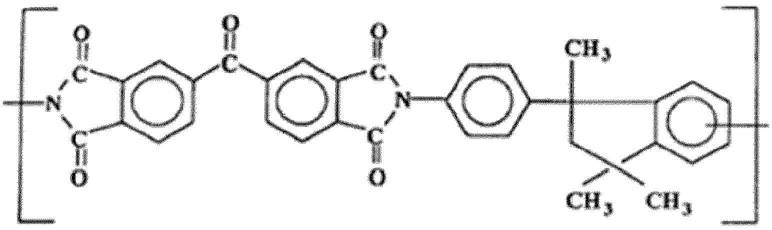

(I)

Ein besonders bevorzugtes Polyetherimide weist die nachfolgende chemische Struktur auf und ist kommerziell unter dem Namen ULTEM 1000 von Sabic erhältlich.

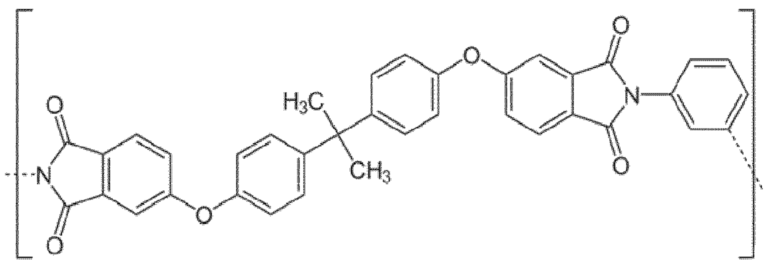

(II)

Besonders bevorzugte Polyamidimide sind die Polymere mit Markennamen Torlon und Kermel mit nachfolgend angeführter Zusammensetzung,

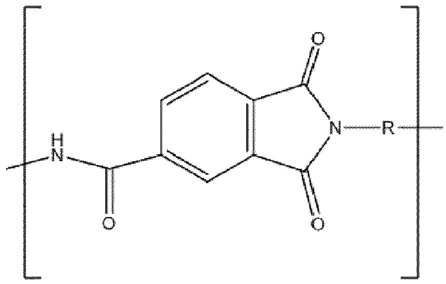

(III)

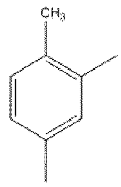

(L2)

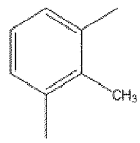

(L3)

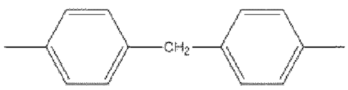

(L4)

wobei der Rest R einem oder mehreren, identischen oder unterschiedlichen Resten, ausgewählt aus der Gruppe bestehend aus L2, L3 und L4, entspricht.

Geeignete Lösungsmittel zur Herstellung der Polymerlösung sind alle Lösungsmittel, die die Polymere des erfindungsgemäßen Verfahrens vollständig lösen und die bevorzugt mit mindestens einem der verwendeten Nichtlösemittel, besonders bevorzugt mit allen verwendeten Nichtlösungsmitteln, vollständig mischbar sind. Bevorzugt wird im erfindungsgemäßen Verfahren das Lösungsmittel verwendet, das auch bei der Herstellung des Polymers verwendet wurde.

Als Lösemittel werden bevorzugt aprotisch dipolare Lösungsmittel, besonders bevorzugt Dimethylformamid (DMF), Dimethylacetamid (DMAc), Dimethylpropionamid (DMPr), N-Methylpyrrolidon (NMP), N-Ethylpyrrolidon (NEP), Dimethylsulfoxid (DMSO), Sulfolan, Tetramethylharnstoff, Tetrahydrofuran (THF), 1,4-Dioxan, 1,3-Dioxan, 1,3-Dioxolan oder Gemische daraus verwendet. Im erfindungsgemäßen Verfahren besonders bevorzugt sind die Verwendung von DMF, DMSO, DMAc, NMP und NEP als Lösungsmittel.

Die o.g. Lösungsmittel können - wie bereits erwähnt - eingesetzt werden, um Polymergranulate oder -pulver aufzulösen, um damit Polymerlösungen für das erfindungsgemäße Verfahren herzustellen. Die Lösungsmittel werden aber auch eingesetzt, um die Polymere direkt darin, bevorzugt über eine Polykondensationsreaktion, herzustellen.

So führt zum Beispiel die Umsetzung eines oder mehrerer aromatischer Tetracarbonsäuredianhydride mit einem oder mehrerer aromatischer Diisocyanate unter Abspaltung von Kohlendioxid zu einer Polykondensationslösung, welche das lösliche Polyimid, bevorzugt in Lösungsmitteln wie DMF, DMAc, NMP und/oder NEP, enthält.

Nach einem ähnlichen Reaktionsmechanismus erhält man auch Polykondensationslösungen von löslichen Polyamidimiden (Torlon, Kermel) durch Umsetzung von Trimellitsäureanyhdrid mit aromatischen Diisocyanaten, bevorzugt in DMF, DMAc oder NMP.

Auch durch nukleophile Substitutionsreaktionen am Aromaten sind Polykondensationslösungen in den beschriebenen Lösungsmitteln erhältlich, die als Polymerlösungen zur Herstellung von Pulvern nach dem erfindungsgemäßen Verfahren geeignet sind. So kann zum Beispiel ULTEM 1000 (Zusammensetzung siehe oben) durch Umsetzung von N-Phenyl-4-nitrophthalimid und dem Dinatriumsalz von Bisphenol A in einem Lösungsmittel wie NMP hergestellt werden.

In die Polymerlösung wird in Schritt b) und ggf. auch schon beginnend davor, z.B. in Schritt a), insbesondere in Schritt a2), bevorzugt mittels eines Mischwerkzeugs Energie eingetragen. Zum Eintrag von Stabilisierungsenergie in Schritt b) und ggf. auch in einem vorangehenden Schritt, kommen hier alle am Markt befindlichen interne und externe Aggregate, bevorzugt Mischer und Rührer in Frage, die genügend Stabilisierungsenergie, bevorzugt Scherenergie, in

das System eintragen können, um eine Koagulation der in Schritt b) intermediär entstehenden Emulsion zu vermeiden, sodass feine Pulver herstellbar sind. Folgende Rührer sind beispielsweise aber nicht ausschließlich zum Mischen und Homogenisieren, d.h. Herstellung der Lösung in Schritt a) bzw. Stabilisieren in Schritt b) und ggf. auch schon beginnend in Schritt a), einsetzbar:

- Propellerrührer
- Schrägblattrührer
- Scheibenrührer
- Taumelscheibenrührer Hollowbladerührer
- Impellerrührer
- Kreuzbalkenrührer
- Blattrührer
- Gitterrührer
- Gaseinleitungsrührer
- Wendelrührer
- Zahnscheibenrührer zentrisch mit oder ohne Planetenantrieb und wandgängigem Abstreifer
- Magnetrührer

Besonders bevorzugt sind schnelllaufende Zahnscheibenrührer, die eine hohe Scheerenergie in die Polymerlösung einbringen und so für eine gute Durchmischung und Dispergierung sorgen. Ebenso kann eine Ultraschallsonde zur Homogenisierung eingesetzt werden.

Das erfindungsgemäße Verfahren kann diskontinuierlich oder kontinuierlich betrieben werden. Wenn der Prozess kontinuierlich durchgeführt wird, wird bevorzugt die Lösung in Schritt b) und ggf. auch Schritt a2) durch ein Aggregat, bevorzugt ein Inline-Dispergierer, Inline Emulsifizierungspumpen, geleitet, welches Scherenergie in die Lösung einbringt. Dabei wird besonders bevorzugt stromaufwärts und/oder an der Stelle der Scherung der Lösung mindestens ein Nichtlösungsmittel bzw. mindestens ein Gemisch aus Lösungsmittel und Nichtlösungsmittel zudosiert.

In der diskontinuierlichen Fahrweise wird in Schritt b) und ggf. auch in Schritt a), insbesondere Schritt a2), beim Mischen bzw. Dispergieren Stabilisierungsenergie in das System eingebracht. Durch hohe Drehzahlen oder große Durchmesser der Rührwerke kann besonders viel Scherenergie in das System eingebracht werden. Prinzipiell sind viele Rührergeometrien nutzbar zur Herstellung von Pulvern nach dem erfindungsgemäßen Verfahren. Vorzugsweise werden jedoch Rührsysteme mit hohem Schereintrag verwendet wie beispielsweise ein Zahnscheibenrührer. Die Zahnscheibe kann dabei einen Durchmesser von wenigen Zentimetern haben (bei kleinen Gefäßen) bis zu einem Meter oder mehr (bei großen Behältern).

Da die Scherrate des Rührwerkes und die Güte der Dispergierung die Morphologie und die Korngröße des Pulvers beeinflussen, werden im erfindungsgemäßen Verfahren bevorzugt Zahnscheibenrührer mit Umdrehungsgeschwindigkeiten der Zahnscheibe zwischen 100 und 15.000 Umdrehungen pro Minute verwendet. Besonders bevorzugt werden - je nach Drehzahl und Umfang der verwendeten Scheibe - Schergeschwindigkeiten (=Umlaufgeschwindigkeit der Zahnscheibe) von 0,01 bis 100 m/s, bevorzugt 0,1 bis 30 m/s, besonders bevorzugt 1 bis 30 m/s und ganz besonders bevorzugt 2 bis 20 m/s verwendet. Wird das Verfahren kontinuierlich betrieben oder werden andere Rührer als Zahnscheibenrührer verwendet, so werden entsprechende kontinuierliches oder diskontinuierliche Scheraggregate verwendet, welches ein gleich großes oder höheres Scherfeld erzeugen wie oben für den Zahnscheibenrührer beschrieben.

Ein konkretes Beispiel für ein geeignetes Aggregat im Labormaßstab ist ein Zahnscheibenrührer der Firma Mischtechnik Hoffmann aus Österreich. Dieser ist ausgestattet mit einem Rührmotor mit bis zu 4000 U/min, einem beheiz- und kühlbaren Doppelmantelbehälter mit einem Volumen von 10 1, einem Planetenantrieb, der die Dissolverscheibe exzentrisch im zylindrischen Behälter bewegt und einem wandgängigen Abstreifer aus PTFE. Zur Messung des pH-Wertes ist eine Glaselektrode am Behälterboden angebracht.

Der Schritt a2) kann zu verschiedenen Zeitpunkten im erfindungsgemäßen Verfahren beginnen oder durchgeführt werden. Er kann bereits vor den Schritten a1) und a3) bis a5) aber auch erst unmittelbar vor oder mit Schritt b) begonnen oder durchgeführt werden. Ebenso ist es möglich zu jedem Zeitpunkt zwischen oder während einem der Schritte a1) und a3) bis a5) mit der Einbringung von Stabilisierungsenergie, bevorzugt Scherenergie, zu starten. Die Einbringung kann auch bereits bei der Herstellung der Polymerlösung, z.B. dem Auflösen, beginnen. Bevorzugt wird vor der Zugabe des Nichtlösemittels in Schritt b), die Polymerlösung einem Scherfeld ausgesetzt. Besonders bevorzugt erfolgt Schritt a2) nach Schritt a1) und falls die Schritte a3) bis a5) durchgeführt werden, vor diesen Schritten.

Es hat sich gezeigt, dass die Korngröße des Pulvers und die Korngrößenverteilung auch durch die Temperatur der Polymerlösung in Schritt a) und Schritt b) beeinflusst werden kann. Idealerweise wird diese durch indirekte Heizung oder Kühlung durch einen Doppelmantel des Rührbehälters geregelt. Es sind jedoch auch andere Heiz- und Kühlmöglichkeiten für gerührte Behälter nach dem Stand der Technik einsetzbar.

Die Temperatur des Verfahrens in Schritt b) beträgt bevorzugt zwischen -20 und 200 °C, besonders bevorzugt 0 und 150°C, ganz besonders bevorzugt zwischen 20 und 100 °C, speziell bevorzugt zwischen 20 und 80°C und ganz speziell bevorzugt zwischen 30 und 60°C, unterschiedlich auch je nach Art und Siedepunkt des verwendeten Lösungsmittels bzw. Nichtlösungsmittels. Falls eine Anpassung der Temperatur notwendig ist, erfolgt diese in Schritt a3) bzw. während Schritt b). Der Schritt a3) kann zu verschiedenen Zeitpunkten durchgeführt werden. Schritt a3) kann bereits vor den Schritten a1), a2) und a4) bis a5) aber auch erst unmittelbar vor oder mit Schritt b) erfolgen. Ebenso ist es möglich zu jedem Zeitpunkt zwischen oder während einem der Schritte a1), a2) und a4) bis a5) mit der Temperaturregelung anzufangen bzw. diese durchzuführen. Schritt a3) kann auch bereits bei der Herstellung der Polymerlösung, z.B. dem Auflösen des Polymers, beginnen bzw. durchgeführt werden. Bevorzugt wird die Temperatur der Polymerlösung vor der Zugabe des Nichtlösemittels in Schritt b) auf die Zieltemperatur eingestellt und in Schritt b) auf dieser Temperatur belassen. Ganz besonders bevorzugt werden die Schritte a3) und a4) beide durchgeführt, wobei der Schritt a3) vor, insbesondere bevorzugt unmittelbar vor, Schritt a4) durchgeführt wird.

Im erfindungsgemäßen Verfahren ist es bevorzugt, dass die beim späteren Fällprozess intermediär gebildete Emulsion, neben dem Einbringen der Stabilisierungsenergie, noch weiter stabilisiert wird und sich nicht sofort entmischt. Dies erfolgt bevorzugt über die Einstellung des pH-Wertes. Es sind aber auch andere Methoden, wie z.B. die Änderung der Ionenstärke durch Zugabe von Salzen anwendbar. Vorzugsweise wird im erfindungsgemäßen Verfahren das Zetapotential der Polymere in der Fälllösung so eingestellt, dass sich auf der gebildeten Partikeloberfläche, je nach Natur des Polymeren und dem pH-Wert durch Ladungsträgerschichten eine abstoßende Wirkung auf andere Partikel ergibt und somit ein Koagulieren verhindert wird.

Es wurde überraschend festgestellt, dass sich neben dem stabilisierenden Effekt auf die intermediär gebildete Emulsion, auch die Korngröße des Pulvers ändern lässt, wenn durch Zugabe von Säuren oder Basen der pH-Wert verändert wird. Durch die Einstellung des optimalen pH-Wertes (dieser unterscheidet sich je nach Polymer und gewünschter Korngröße) kann eine optimale Stabilisierung der zwischenzeitlich gebildeten Emulsion erzielt werden. Funktioniert diese Stabilisierung gut, so lassen sich im allgemeinen Pulver mit sehr kleiner Korngröße (< 10 $\mu$m oder sogar < 1$\mu$m) herstellen. Wird die Emulsion weniger stark bzw. nicht stabilisiert, so erhält man grobe Partikel mit Korngrößen jenseits der 500 $\mu$m oder gar grobe Klumpen mit einigen mm oder cm Größe.

Der gewünschte pH-Wert der Polymerlösung des erfindungsgemäßen Verfahrens kann pH 0 bis 14 betragen, vorzugsweise jedoch pH 2 bis 11, besonders bevorzugt pH 4 bis 11, ganz besonders bevorzugt pH 4 bis 10 oder 6 bis 11.

Der pH-Wert kann - sofern er bei der Herstellung der Polymerlösung nicht bereits im richtigen Bereich liegt - durch Zugabe von Säuren oder Basen in Schritt a4) eingestellt werden. Als Säuren kommen bevorzugt wässrige Mineralsäuren, besonders bevorzugt Salzsäure, Phosphorsäure oder Schwefelsäure, oder organische Säuren, besonders bevorzugt Ameisensäure, Essigsäure oder Methansulfonsäure, zum Einsatz. Als Basen kommen bevorzugt mineralische wässrige Basen, besonders bevorzugt Ammoniak, Natronlauge, Kalilauge, Natriumcarbonat, Kaliumcarbonat, oder organische Stickstoffbasen, besonders bevorzugt Triethylamin, Pyridin, Diazabicylooctan oder Alkoholate in alkoholischer Lösung, besonders bevorzugt Natrium methanolat, Kaliummethanolat oder Kalium-t-Butoxid in Ethanol, zum Einsatz. Die Säuren und/oder Basen werden zur Polymerlösung dazugegeben und stellen so den gewünschten pH-Wert ein, der mit einer pH-Messelektrode gemessen wird.

Wie bereits erwähnt erfolgt die Einstellung des pH-Wertes - sofern erforderlich - bereits vor Schritt b) des erfindungsgemäßen Verfahrens.

Die Erfinder haben herausgefunden, dass ein weiterer Parameter, mit dem die Korngröße und die Korngrößenverteilung des herzustellenden Pulvers gesteuert werden kann, der Feststoffgehalt der Polymerlösung ist. Dieser beträgt bevorzugt zwischen 1 und 50 Gew. %, besonders bevorzugt zwischen 1 und 40 Gew. %, ganz besonders bevorzugt zwischen 2 und 30 Gew. %, speziell bevorzugt zwischen 5 und 25 Gew. % und ganz speziell bevorzugt zwischen 7 und 20 Gew. %. Der Feststoffgehalt kann bereits bei Herstellung der Polymerlösung eingestellt werden. Es ist jedoch auch möglich zu einem späteren Zeitpunkt, der jedoch vor Beginn von Schritt b) liegt, in Schritt a5) und/oder in Schritt a1) den Feststoffgehalt durch Zugabe von mindestens einem Lösungsmitteln und/oder mindestens einem Nichtlösemittel und oder Gemischen davon zu reduzieren oder durch Zugabe von festem löslichen Polymer oder Abdampfen oder Abtrennen des Lösungsmittels, z. B. mittels Membranen, zu erhöhen. Besonders bevorzugt folgt auf die

Einstellung des Feststoffgehalts ein Homogenisieren der Lösung.

Nach der Herstellung, Einstellung und Stabilisierung der Polymerlösung in Schritt a) erfolgt in Schritt b) der Fällvorgang unter Einwirkung von Stabilisierungsenergie, bevorzugt Scherenergie, wie oben beschrieben. Dabei wird ein Nichtlösemittel oder ein Gemisch mehrerer Nichtlösungsmittel oder ein Gemisch aus mindestens einem Lösungsmittel und mindestens einem Nichtlösungsmittel, bevorzugt kontinuierlich, besonders bevorzugt oberspiegelig zur Polymerlösung, während des Energieeintrages, bevorzugt des Scherens, zugeführt. An der Eintropfstelle bildet sich eventuell bereits ein Niederschlag des Polymeren, der sich im Allgemeinen aber rasch wieder auflöst.

Als Nichtlösungsmittel zum Fällen der Polymerlösung in Schritt b) bzw. in Schritt a1.2) bzw. in Schritt a5) wird mindestens ein, bevorzugt mit dem Lösungsmittelsystem der Polymerlösung mischbares, Nichtlösungsmittel oder Nichtlösungsmittelgemisch verwendet. Bevorzugt kommen hier Wasser, Alkohole, bevorzugt C1 bis C4 Alkohole, wie Methanol, Ethanol und Isopropanol oder Ketone wie Aceton oder Methylethylketon oder C1 bis C8 Alkyle oder Mischungen daraus zum Einsatz. Besonders bevorzugt sind Wasser und C1 bis C4 Alkohole.

Dem Nichtlösemittel kann in Schritt b) auch ein mischbares Lösemittel zugesetzt werden in einem Bereich bevorzugt zwischen 10 und 90 Gew. %. Als mischbares Lösungsmittel, das dem Nichtlösemittel zugesetzt wird kommen vor allem jene Lösungsmittel in Frage, in denen das zu fällende Polymer in der Polymerlösung gelöst ist. Im erfindungsgemäßen Verfahren kommen als Zusatz zu den Nichtlösemitteln bevorzugt aprotisch dipolare Lösunsgmittel wie Dimethylformamid, Dimethylacetamid, Dimethylpropionamid, N-Methylpyrrolidon, N-Ethylpyrrolidon, Diemethylsulfoxid, Sulfolan oder Tetramethylharnstoff oder Mischungen daraus zum Einsatz. Die Zugabe des Lösungsmittels zum Nichtlösemittel hat den Sinn, die nichtlösende Wirkung des Nichtlösemittels abzuschwächen bzw. genau einzustellen. So ist in vielen Fällen die Verwendung des reinen Nichtlösemittels unvorteilhaft, da die nichtlösende Wirkung zu stark ist und das Polymer an der Eintropfstelle bereits ausfällt, somit unkontrolliert einen Niederschlag bildet mit undefinierter Korngröße und Morphologie, der sich nicht mehr auflöst. So ist es zum Beispiel vorteilhaft starke Nichtlöser wie Wasser oder Alkohole mit Lösemitteln wie DMF, DMAc oder NMP zu verdünnen. Hierbei können bis zu 90 Gew. % des Lösemittels zum Nichtlösemittel zugesetzt werden, bevorzugt werden jedoch 20 bis 80 Gew. % Lösemittel zum Nichtlösemittel hinzugegeben, besonders bevorzugt zwischen 50 und 75 Gew. %. Besonders bevorzugte Mischungen aus Nichtlösemittel und Lösemittel sind zum Beispiel Mischungen aus Wasser und DMF, Wasser und DMAc oder Wasser und NMP mit einem Verhältnis von Wasser und Nichtlösemittel von 30 zu 70 Gew. %.

Bei der Zugabe des Nichtlösemittels zur Polymerlösung wird, das Nichtlösemittel, bevorzugt gleichmäßig und kontinuierlich, zugegeben. Die Zudosiergeschwindigkeit kann auch variiert werden, d.h. auch diskontinuierlich sein, sollte aber kontrolliert werden, da auch die Zudosiergeschwindigkeit die Korngröße verändern kann. Bevorzugte Zudosiergeschwindigkeiten liegen im Bereich zwischen 0,1% und 100% der erforderlichen Menge an Nichtlösemittel pro Minute, besonders bevorzugt zwischen 0,5 und 20% pro Minute und ganz besonders bevorzugt zwischen 1 und 10% pro Minute.

Die erforderliche Menge an Nichtlösemittel hängt von der Zusammensetzung des Nichtlösemittels und von seiner nichtlösenden Eigenschaft ab. Die Menge an notwendigem Nichtlösemittel kann 1 bis 500 Gew. % der ursprünglich vorgelegten Menge an Fälllösung betragen, vorzugsweise jedoch 5 bis 200 Gew. % und besonders vorzugsweise 10 bis 100 Gew. %.

Bei der Zugabe von Nichtlösemittel ist zu beobachten, dass bis zu einer bestimmten Menge an Nichtlösemittel ein eventuell auftretender Niederschlag von Polymer an der Eintropfstelle sich wieder restlos auflöst. Ab einer bestimmten Menge an Nichtlösemittelzugabe findet ein schlagartiger Umschlag von einer homogenen Lösung in eine zweiphasige Emulsion statt. Man erhält hier zwei nichtmischbare flüssige Phasen. Wird hier aufgehört zu dispergieren, d.h. Stabilisierungsenergie zuzuführen, so entmischen sich beide Phasen und man erhält eine höherviskose polymerreiche, an Nichtlösemittel arme, flüssige Phase und eine polymerarme, an Nichtlösemittel reiche, flüssige Phase. Daher ist es wichtig, für eine gute Dispergierung zu sorgen. Mit der Güte der Dispergierung ausgedrückt in der zugeführten Stabilisierungsenergie, z.B. der Scheergeschwindigkeit der Zahnscheibe des Dissolvers, kann die Korngröße und die Breite der Korngrößenverteilung des Pulvers gesteuert werden. Der Eintrag der Stabilisierungsenergie, bevorzugt die Scherung, erfolgt wie oben beschrieben bzw. mit den dort diskutierten Gerätschaften.

Wenn nun weiter Nichtlösemittel zugegeben wird, so findet ein weiterer Phasenübergang von einer Emulsion zu einer Suspension statt. Man erhält nun Feststoffpartikel von den Polymeren als Suspension in einer Mischung aus Lösemittel und Nichtlösemittel. Nachdem das Polymer vollkommen in den festen Zustand überführt worden ist, kann bevorzugt noch eine bestimmte Menge an reinem Nichtlösemittel ohne Zusatz von Lösemittel zugesetzt werden, um sicherzugehen, dass alle Anteile an Polymer auch wirklich ausgefällt sind. Die Menge an Nichtlösemittel beträgt dabei 0,1 bis 100 Gew. % der ursprünglichen Menge an Polymerlösung, bevorzugt 1 bis 50 Gew. % und besonders bevorzugt 5 bis 30 Gew. %.

Im erfindungsgemäßen Verfahren erhält man am Ende von Schritt b) eine Suspension aus einem Polymerpulver in einem Gemisch aus Lösungsmitteln und Nichtlösungsmitteln. Die Feststoffkonzentration des Polymeren in der Suspension liegt vorzugsweise zwischen 0,1 und 70 Gew. %, bevorzugt aber zwischen 1 und 40 Gew. %, besonders bevorzugt zwischen 2 und 30 Gew. % und ganz besonders bevorzugt zwischen 5 und 25 Gew. %. Die Korngröße der

erhaltenen Pulver (d90 - Wert) in der Suspension nach dem erfindungsgemäßen Verfahren erstreckt sich vorzugsweise über einen Bereich von 0,01 bis 1200 μm, bevorzugt von 0,01 bis 1000 μm, besonders bevorzugt von 0,05 bis 1000μ m, ganz besonders bevorzugt von 0,3 bis 1000 μm, insbesondere bevorzugt von 0,4 bis 1000 μm, speziell bevorzugt von 0,5 bis 800 μm und am meisten bevorzugt 0,6 bis 500 μm.

Nach dem Fällvorgang ist es vorteilhaft, die Suspension frei von Lösungsmitteln zu waschen, bevor das Pulver isoliert und getrocknet wird. Dadurch kann ein Wiederauf- bzw. anlösen des Polymer durch verbleibendes Restlösemittel bei einem Trockenprozess bei erhöhter Temperatur verhindert werden.

Die Schritte c) bis e) des erfindungsgemäßen Verfahrens, vom Ende der Fällung bis zum getrockneten Pulver, können unterschiedlich durchgeführt werden.

In einer bevorzugten Verfahrensalternative wird das Lösungsmittel in Schritt c) möglichst weitgehend aus der Flüssigphase der Suspension entfernt. Dies kann z. B. durch ein wiederholtes Abfiltrieren und wiedersuspendieren des Pulvers mit Wasser oder anderen Nichtlösemitteln erfolgen, solange bis das Restlösemittel unterhalb eines bestimmten Gehaltes ist. Dieser Gehalt an Lösungsmittel in der Flüssigphase ist vorzugsweise weniger als 5 Gew. %, besonders bevorzugt weniger als 1 Gew. % und ganz besonders bevorzugt weniger als 0,1 Gew. %.

Besonders bei sehr feinen Pulvern (< 20 μm) ist die Verwendung eines Filters zum Waschen des Pulvers in Schritt c) unvorteilhaft, weil das feine Pulver das Filter leicht verstopft und die Waschflüssigkeit nur schwer das Filter passieren kann. In einer weiteren bevorzugten Verfahrensalternative erfolgt die Abtrennung des Lösungsmittels aus der Flüssigphase in Schritt c) durch Verwendung einer Querstromfiltration über einer Membran. Bei hoher Überströmungsgeschwindigkeit von einigen Metern pro Sekunde bildet sich auf der, bevorzugt mikroporösen oder nanoporösen, Membran kein Filterkuchen, die Membran bleibt somit permeabel auch bei sehr feinen Partikelgrößen des erfindungsgemäßen Pulvers. Es wird in diesem Fall daher bevorzugt unter Zuhilfenahme einer Querstromfiltration eine Verdünnungswäsche durchgeführt bis die gewünschte Restlösemittelkonzentration in den o.g. Bereichen liegt.

Die, wie oben beschrieben in Schritt c), vom Lösungsmittel befreite bzw. weitgehend befreite Suspension kann nun in Schritt d) abfiltriert und der entstehende Filterkuchen dann in Schritt e) in einem geeigneten Trockenaggregat, bevorzugt einem Trockenschrank oder einem bewegten Trockner, getrocknet werden. Es können hierzu alle am Markt befindlichen Trocknungstechnologien angewendet werden. Die Trockentemperaturen können je nach verwendetem Polymeren variieren zwischen 50 und 400°C.

In einer alternativen, bevorzugten, Ausführungsform erfolgt eine Festflüssigtrennung, bevorzugt durch Filtration und/oder Zentrifugation, und dann Trocknung, bevorzugt direkt in einem Kontakttrockner. Dieses Verfahren eignet sich vor allem für grobe Partikel.

Alternativ und besonders bevorzugt wird die Suspension in Schritt d) mittels eines Sprühtrockners und Abscheidung des Pulvers in einem Zyklon und/oder Filterhaus, getrocknet. Dies erspart den Filtrationsschritt. Ein weiterer Vorteil ist, dass beim Trocknen keine Agglomerate gebildet werden, das Pulver ist somit frei von Agglomeraten und muss nicht mehr nachträglich gesiebt oder deagglomeriert werden. Zum Einsatz kommen hier Standardsprühtrockensysteme mit Zentrifugal- oder 2-Stoffdüsenzerstäubung, die im Gleich- oder Gegenstrom geführt werden und mit Luft oder einem Inertgas gespeist werden. In diesem Fall entfällt üblicher Weise Schritt e), da die Trocknung bereits in Schritt d) erfolgte.

Grundsätzlich umfasst das erfindungsgemäße Verfahren auch Ausführungsformen, in denen Schritt c) entfällt, d.h. in denen die nach Schritt b) erhaltene Suspension direkt filtriert und sowohl Lösungsmittel als auch Nichtlösungsmittel, z. B. bei der Trocknung, abgezogen werden oder, in denen ein direktes Sprühtrocknen der Suspension nach Schritt b) erfolgt. Die weiter oben beschriebenen Varianten mit Schritt c) sind aus den o.g. Gründen bevorzugt.

Man erhält mit dem erfindungsgemäßen Verfahren ein lösungsmittelfreies und trockenes Pulver mit verschiedenen Korngrößen (d90 Wert) von vorzugsweise 0,01 bis 1200 μm, bevorzugt 0,01 bis 1000 μm, besonders bevorzugt 0,05 bis 1000 μm, ganz besonders bevorzugt 0,1 bis 1000 μm, speziell bevorzugt von 0,3 bis 1000 μm, speziell bevorzugt von 0,4 bis 900 μm, ganz speziell bevorzugt 0,5 bis 800 μm und am meisten bevorzugt 0,6 bis 500 μm.

Die Schüttdichte der erfindungsgemäßen Pulver liegt vorzugsweise zwischen 0,05 und 0,8 kg/l, besonders bevorzugt jedoch zwischen 0,2 und 0,7 kg/l. Das Rieselverhalten der Pulver ist gut, das Staubverhalten der Pulver kann reduziert werden durch Vermeidung der Bildung von Feinanteilen (< 30 μ) bei der Herstellung der Pulver.

Das Pulver aus dem erfindungsgemäßen Verfahren weist im Gegensatz zu alternativen Herstellverfahren üblicher Weise Partikeln mit in etwa sphärischer Struktur auf. Diese Partikelmorphologie kann durch Rasterelektronenmikroskopie eindeutig gezeigt werden. Diese sphärische Morphologie wird durch den erfindungsgemäßen Fällprozess eingestellt und kann bei gemahlenen Pulvern nicht gefunden werden. Diese Morphologie kann zu einer Verbesserung der Wirkung als Schlagzähmodifier in Composites aber auch zu besseren Fülleigenschaften bei der Hot Compression Molding (HCM) Verarbeitung führen.

Die Pulver weisen nach der Aufarbeitung der Fällsuspension eine sehr kleine spezifische Oberfläche nach BET auf. Stickstoffsorptionsmessungen der erfindungsgemäßen Pulvern zeigen eine spezifische Oberfläche von deutlich kleiner als 1 $m^2$/g. Diese spezifischen Oberflächen sind deutlich kleiner als Pulver aus dem derzeit kommerziell eingesetzten alternativen Verfahren aus EP 0279807. Die kleinere Oberfläche ergeben in der Anwendung Hot Compression

Molding, Formteile mit höheren Dichten, ebenso ist eine bessere Versinterung zu erwarten.

**Messmethoden:**

pH-Wert Messung:

Der pH-Wert wurde während der Fällung kontinuierlich mittels eines pH-Meters von *Metrohm* gemessen. Als Elektrode diente dabei eine *Unitrode* mit eingebautem Pt1000 Temperatursensor. Die *Unitrode* ist mit dem Außenelektrolyt *Idrolyt* ausgestattet. Dieser ist ein Elektrolyt auf Glycerinbasis, dessen Chloridionenaktivität derjenigen einer KCl-Lösung mit c(KCl) = 3mol/L entspricht. Die *Unitrode* ist speziell für schwierige Systeme wie Suspensionen, Harze oder Polymere geeignet. Auch kann mit diesem System der pH-Wert bei höheren Temperaturen zwischen 80 und 100°C gemessen werden.

Messung des Feststoffgehaltes der Polymerlösung in Schritt a)

Die Bestimmung des Feststoffgehaltes in Polymerlösungen erfolgt gravimetrisch durch Abdampfen des enthaltenen Lösungsmittels und anschließender Rest-Lösungsmittel Bestimmung.

Messung des Feststoffgehaltes der Suspension in Schritt b)

Die Bestimmung des Feststoffgehaltes der Suspension erfolgt gravimetrisch mittels *Kern MRS 120-3* IR-Trockner. Dabei werden ca. 5 g der Suspension auf eine Aluschale eingewogen und in den Trockner gestellt. Dieser trocknet die Probe bei 130°C. Das Gerät erkennt dabei selbständig den Endpunkt der Trocknung und gibt das Ergebnis der Trockensubstanz analog auf Papierstreifen aus. Je nach Feststoffgehalt bei der Fällung variiert der Trockengehalt der Suspension.

Messung der Viskosität der Polymerlösung

Die Messung der Viskosität der Polymerlösung erfolgt mittels Messgerät *HAAKE RS 600.* Dabei wird die dynamische Viskosität $\eta$ durch Scherung der Polymerlösung (17,0 $\pm$ 1,0 g) in einem zylindrischen Spalt bei konstanter Temperatur von 25°C einmal durch Vorgabe verschiedener Drehzahlen Q (bzw. Schergefällen $\gamma$) und anschließend durch Vorgabe verschiedener Schubspannungen $\tau$ ermittelt. Der Durchlauf des Schergefälles beträgt dabei 1,25 bis 40 $s^{-1}$, der Durchlauf der Schubspannung 2250 bis 100 Pa. Die Auswertung der dynamischen Viskosität erfolgt automatisch über die *Rheo*

*Win-Software*

Messung Partikelgröße (trocken, Nass)

Die Messung der Pulverkorngröße wird mittels *Malvern Mastersizer 2000* durchgeführt und sowohl direkt aus der gefällten Suspension, als auch aus dem getrockneten Pulver bestimmt. Für die Bestimmung der Korngrößenverteilung in der Suspension wird die Nassdispergiereinheit *HydroS,* für die Bestimmung des Pulvers die Trockendispergiereinheit *Scirocco* verwendet.

Das Prinzip der Messung beruht auf der Laserbeugung, wobei die Intensität des gestreuten Lichts eines Laserstrahls gemessen wird, der eine dispergierte Probe durchdringt. Laut Fraunhofer-Theorie erzeugen kleinere Partikel einen größeren Streuwinkel. Aus dem erhaltenen Beugungsmuster werden die Größe der Partikel und eine statistische Verteilung berechnet. Für die Messung mittels Nassdispergiereinheit werden einige wenige Tropfen, für die Messung mittels Trockendispergiereinheit 2 - 3 g (je nach Schüttdichte) der Probe benötigt.

Schüttdichte des Pulvers

Die Bestimmung der Schüttdichte erfolgt gravimetrisch in Doppelbestimmung mittels *SMG 53466* von der *Fa. Powtec.* Dabei wird die Masse von 100 ml Pulver bestimmt. Aus den erhaltenen Auswaagen kann die Schüttdichte des Pulvers berechnet werden.

Die nachfolgenden Beispiele dienen zur Erläuterung und zum besseren Verständnis der vorliegenden Erfindung, schränken diese jedoch in keiner Weise ein. Abwandlungen der Beispiele bzw. Übertragung auf andere Polymere sind für jeden in der Technik geschulten Fachmann leicht möglich.

Beispiele:

Beispiel 1: Fällung von P84 Typ 70

Eine Polykondensationslösung von P84 Typ 70 (Evonik Fibres GmbH, Austria) in DMF mit einem Feststoffgehalt von 27 Gew. %, hergestellt ohne zwischenzeitliche Isolierung des Polyimides als Pulver und Wiederauflösung desselben, wurde mit DMF auf einen Feststoffgehalt von 17,5 Gew. % verdünnt. 200 g dieser Lösung wurden in ein hohes 1000 ml Becherglas mit 10 cm Durchmesser eingefüllt. Als Rührer kam ein IKA T50 Ultraturrax mit einem Zahnscheibendissolver R1402 mit einem Zahnscheibendurchmesser von 5 cm zum Einsatz. Die Lösung wurde auf Stufe 1 (Rührerdrehzahl 4400 U-min-1) gerührt. Der pH-Wert der Lösung wurde durch Zutropfen einer wässrigen 25 %igen Ammoniaklösung auf pH 9 gebracht und während des gesamten Fällprozesses auf pH 9 gehalten. Die Temperatur der Polymerlösung betrug 37°C. Zu dieser Polymerlösung wurde nun mit einer Geschwindigkeit von 5 ml/min 80 ml einer Mischung von DMF und Wasser (70/30) zudosiert. Dabei wurde ein zweimaliger Phasenübergang von einer homogenen Phase in eine Emulsion und dann von einer Emulsion schließlich in eine Suspension beobachtet. Danach wurden noch 86 ml reines Wasser zudosiert. Die Fällung war somit abgeschlossen. Man erhielt eine Suspension von P84 Typ 70 Polymerpartikeln in Wasser und DMF. Die Partikelgröße wurde in der Suspension bestimmt und betrug:

Partikelgröße d10: 2,8 μm
Partikelgröße d50: 16,6 μm
Partikelgröße d90: 118,6 μm

Beispiel 2: Einfluss des pH Wertes der Polymerlösung auf die Korngröße

Das Beispiel 1 wurde wiederholt mit denselben Einstellungen, jedoch wurde der pH - Wert der Polymerlösung von pH 9 verändert zu pH 7, 8, 8,5 und 10. In nachfolgender Tabelle 1 ist der deutliche Einfluss des pH Wertes auf die Korngröße zu sehen.

**Tabelle 1:**

| pH-Wert | d(10) [μm] | d(50) [μm] | d(90) [μm] |
|---|---|---|---|
| **7** | 42,682 | 159,953 | 511,542 |
| **8** | 13,128 | 65,774 | 235,991 |
| **8,5** | 5,552 | 27,335 | 124,737 |
| **9** | 2,771 | 16,557 | 118,570 |
| **10** | 1,244 | 3,604 | 26,590 |

Bei P84 Type 70 bewirkt die Erhöhung des pH Wertes eine deutliche Verkleinerung der Korngröße des entstehenden Polyimidpulvers.

Beispiel 3: Einfluss des Feststoffgehaltes der Polymerlösung auf die Korngröße

Das Beispiel 1 wurde bei den pH Werten 7 und 10 wiederholt, nur wurde der Feststoffgehalt der Lösung verändert, indem ausgehend von einer 27 Gew.%igen Lösung mit DMF als Lösungsmittel auf 7,5, 10, 12,5, 15, 17,5, 20 und 22,5 Gew.% verdünnt wurde. Die Ergebnisse sind in nachfolgender Tabelle 2 wiedergegeben.

**Tabelle 2:**

| | **pH 7** | | | **pH 10** | | |
|---|---|---|---|---|---|---|
| **Konzentration [%]** | **d(10) [μm]** | **d(50) [μm]** | **d(90) [μm]** | **d(10) [μm]** | **d(50) [μm]** | **d(90) [μm]** |
| **7,5** | 3,386 | 6,134 | 10,72 | 0,090 | 0,155 | 0,290 |
| **10** | 7,479 | 12,145 | 21,519 | 0,077 | 0,160 | 0,379 |
| **12,5** | 17,186 | 32,042 | 76,507 | 0,404 | 1,008 | 3,321 |
| **15** | 32,645 | 101,019 | 321,957 | 0,891 | 1,856 | 11,207 |

(fortgesetzt)

| | pH 7 | | | pH 10 | | |
|---|---|---|---|---|---|---|
| **Konzentration [%]** | **d(10) [μm]** | **d(50) [μm]** | **d(90) [μm]** | **d(10) [μm]** | **d(50) [μm]** | **d(90) [μm]** |
| **17,5** | 42,682 | 159,953 | 511,542 | 1,244 | 3,604 | 26,590 |
| **20** | - | - | - | 2,996 | 23,583 | 121,568 |
| **22,5** | - | - | - | 2,751 | 12,696 | 50,605 |

Es ist deutlich zu sehen, dass bei konstantem pH Wert die Partikelgröße mit steigender Feststoffkonzentration deutlich zunimmt.

Beispiel 4 : Einfluss des Lösungsmittels der Polymerlösung auf die Korngröße

Beispiel 1 wurde wiederholt bei einem Feststoffgehalt von 10 Gew. % von P84 Typ 70 in jeweils anderen Lösungsmitteln (DMAc, NMP, DMSO) bei einem pH Wert von 7. Als Nichtlösungsmittel wurde jeweils eine Mischung des jeweiligen Lösungsmittels mit Wasser im Verhältnis 70 zu 30 Gew. % verwendet. Die Ergebnisse sind in Tabelle 3 zusammengefasst:

**Tabelle 3:**

| Lösungsmittel | d(10) [μm] | d(50) [μm] | d(90) [μm] |
|---|---|---|---|
| **DMAc** | 1,724 | 3,245 | 5,861 |
| **NMP** | 1,341 | 2,147 | 3,430 |
| **DMSO** | 5,644 | 9,788 | 75,671 |
| **DMF** | 7,479 | 12,145 | 21,519 |

Tabelle 3 zeigt, dass die Herstellung von Pulvern aus verschiedenen aprotisch dipolaren Lösungsmitteln funktioniert. Die resultierende Korngröße ist jedoch unterschiedlich in verschiedenen Lösungsmitteln.

Beispiel 5: Einfluss der verwendeten Base auf die Korngröße

Beispiel 4 wurde wiederholt. Anstatt der Verwendung von Ammoniak als Base wurde jedoch Triethylamin verwendet, um die Lösung auf den gewünschten pH Wert zu bringen. Man erhält Pulver aus P84 Typ 70 mit den in der nachfolgenden Tabelle 4 angegebenen Korngrößen.

**Tabelle 4:**

| Lösungsmittel | d(10) [μm] | d(50) [μm] | d(90) [μm] |
|---|---|---|---|
| **NEP** | 0,833 | 1,336 | 2,205 |
| **DMAc** | 1,491 | 2,674 | 4,705 |
| **NMP** | 1,323 | 2,095 | 3,309 |
| **DMSO** | 2,923 | 5,275 | 11,835 |

Tabelle 4 belegt, auch die Verwendung von Triethylamin ergibt Pulver nach dem erfindungsgemäßen Verfahren.

Beispiel 6: Einfluss der Drehzahl des Dissolvers auf die Korngröße

Für Versuche im 61-Maßstab wird von der Fa. Mischtechnik ein Technikumsdissolver mit Planetenantrieb, an dem die Dissolverscheibe, ein Abstreifer und ein Temperaturfühler triangulär angeordnet sind, herangezogen. Die Drehzahl der Dissolverscheibe kann stufenlos verstellt werden und ein Temperieraggregat ermöglicht die Fällung bei konstanter Temperatur. Der Behälterdurchmesser beträgt 250 mm, der Dissolverdruchmesser 90 mm. Somit beträgt das Verhältnis des Behälterdurchmmessers zum Durchmesser der Dissolverscheibe D/d ca. 1/3. Die maximale Drehzahl

der Dissolverscheibe ist mit 4000 $min^{-1}$, die des Planetenantrieb 132 $min^{-1}$ begrenzt.

Die Fällungen zur Bestimmung des Einfluss der Drehzahl des Dissolvers wurden alle bei 45°C, pH 7,0 und mit 10%iger Polymerlösung aus P84 Typ 70 in DMF durchgeführt. Ebenso wurden die Umdrehung des Planetenantriebs mit 50 $min^{-1}$ und die Dosiergeschwindigkeit des Fällmittels mit 110 g/min konstant gehalten. Es wurden Fällungen bei 1000, 2000 und 3000 $min^{-1}$ von jeweils 2500 g Polymerlösung durchgeführt. Dafür sind jeweils 720 g DMF/$H_2O$ im Verhältnis 70/30 und 1440 g $H_2O$ als Fällmittel nötig.

In der nachfolgenden Tabelle 5 sind die Ergebnisse aus den Fällungen dargestellt. Die Umfangsgeschwindigkeit der Dissolverscheibe berechnet sich aus der Formel:

$$v = d \cdot \pi \cdot n$$

u... Umfangsgeschwindigkeit in m/s
d... Durchmesser der Dissolverscheibe in m
n... Drehzahl der Dissolverscheibe in $s^{-1}$

**Tabelle 5:**

| Fällung | Drehzahl | Umfangsgeschwindigkeit | Korngrößenverteilung | | |
|---|---|---|---|---|---|
| | [$min^{-1}$] | u [m/s] | d(10) [µm] | d(50) [µm] | d(90) [µm] |
| 1 | 1000 | 4,7 | 7,013 | 22,190 | 68,072 |
| 2 | 2000 | 9,4 | 8, 960 | 22,128 | 54,793 |
| 3 | 3000 | 14,1 | 9,181 | 20,583 | 42,046 |

Wie in der Tabelle 5 ersichtlich nimmt die Korngröße mit steigender Drehzahl der Dissolverscheibe ab (d90-Wert), jedoch erhöht sich der Feinanteil bei hohen Drehzahlen (d10-Wert). Des Weiteren kommt es zu einer Schmälerung der Korngrößenverteilung, je höher die Umfangsgeschwindigkeit gewählt wird.

Beispiel 7: Einfluss Einfluss der Dosiergeschwindigkeit des Fällmittels auf die Korngröße

Um den Einfluss der Dosiergeschwindigkeit des Fällmittels zu ermitteln wurden Fällungen bei Dosiergeschwindigkeiten von 70, 110 und 300 g/min durchgeführt. Wie in Beispiel 6 beschrieben wurden die Fällungen unter gleichbleibenden Bedingungen (bei pH 7,0, mit 2500 g Polymermasse 10 wt%, bei 45°C, mit einer Dissolverdrehzahl von 2000 $min^{-1}$, 50 $min^{-1}$ beim Planetenantrieb und gleicher Menge an Fällmittel) durchgeführt.

Die Dosierung der Fällmittel erfolgt mittels Zahnradpumpe und Steuergerät *Reglo-Z* der Fa. *ISMATEC.* Die maximale Fördermenge der Dosierpumpe ist mit 300 g/min begrenzt.

In der nachfolgenden Tabelle 6 sind die Ergebnisse der Korngrößenbestimmung aus den gefällten Suspensionen ersichtlich.

**Tabelle 6:**

| Fällung | Dosiergeschwindigkeit | Korngrößenverteilung | | |
|---|---|---|---|---|
| | [g/min] | d(10) [µm] | d(50) [µm] | d(90) [µm] |
| 1 | 70 | 1,831 | 90,426 | 229,866 |
| 2 | 110 | 1,943 | 160,411 | 469,697 |
| 3 | 300 | 2,510 | 157,143 | 506,797 |

Wie die Tabelle 6 zeigt nimmt die Korngröße mit steigender Dosiergeschwindigkeit zu, wobei der Unterschied zwischen 70 und 110 g/min deutlich größer ausfällt als zwischen 110 und 300 g/min. Das bedeutet, dass die Dosiergeschwindigkeit des Fällmittels ab einem bestimmten Punkt nur noch einen eher unbedeutenden Einfluss hat. Allerdings ist klar ersichtlich, dass die Korngrößenverteilung bei niedrigen Dosiergeschwindigkeiten deutlich schmäler ausfällt als bei hohen.

Beispiel 8: Einfluss der Polymerlösungstemperatur auf die Korngröße

Um den Einfluss der Temperatur auf die Korngröße zu überprüfen, wurden obige Versuche mit P84 Typ 70 in DMF bei pH 7 mit 7,5 und 12,5%igen Lösungen jeweils bei 60 und 80°C durchgeführt. Die Ergebnisse wurden im Anschluss mit jenen aus bereits vorliegenden Ergebnissen bei 38°C verglichen. Man sieht eine Änderung der Korngrößenverteilung mit der Temperatur bei allen Feststoffgehalten in nachfolgender Tabelle 7.

**Tabelle 7:**

| **Feststoffgehalt [%]** | **Temperatur [°C]** | **d(90) [μm]** |
|---|---|---|
| **7,5** | 38 | 10,720 |
| | 60 | 16,632 |
| | 80 | 27,847 |
| **12,5** | 38 | 76,507 |
| | 60 | 32,828 |
| | 80 | 45,707 |

Beispiel 9: Fällung durch Zugabe unterschiedlicher Nichtlösungsmittel

Beispiel 1 wurde bei einem Feststoffgehalt von 10% P84 Typ 70 in DMF wiederholt. Als Basen wurden NaOH (pH 11,0) und Triethylamin (pH 8,0) verwendet um die Lösung auf den gewünschten pH-Wert zu bringen. Anstatt einer DMF/Wasser-Mischung (70/30) wurden Mischungen von DMF/Ethanol (70/30) und DMF/Isopropylalkohol (70/30) als Fällmittel eingesetzt.

Tabelle 8 zeigt die Ergebnisse der Korngrößenbestimmung aus den gefällten Suspensionen.

Tabelle 8:

| Fetstoffgehalt [%] | Fällmittel | Base | pH-Wert | d(90) [μm] |
|---|---|---|---|---|
| 10 | Ethanol | Triethylamin | 8, 0 | 41,222 |
| | | NaOH | 11,0 | 50,010 |
| | Isopropylalkohol | Triethylamin | 8, 0 | 82,579 |
| | | NaOH | 11,0 | 15,388 |

Beispiel 10: Verwendung von Ultraschall als Dispergiermittel

Um die Verwendung von Ultraschall als Dispergiermittel zu überprüfen, wurden Fällungen von 10 und 15%igen P84 Typ 70 Lösungen in DMF unter Einsatz eines Hielscher Ultraschallprozessor UP200S durchgeführt. Die Lösung wurde dabei zusätzlich mittels Magnetrührer bei 500 U/min gerührt. Der Ultraschallprozessor wurde während der gesamten Fällung mit einer Amplitude von 50% betrieben. Ebenso wie in Beispiel 9 wurden NaOH und Triethylamin als Base eingesetzt.

In der nachfolgenden Tabelle 9 sind die Ergebnisse aus der Korngrößenbestimmung der gefällten Suspensionen ersichtlich.

Tabelle 9:

| Feststoff [%] | Base | pH-Wert | Amplitude Ultraschall [%] | Drehzahl Magnetrührer [U/min] | d(90) [μm] |
|---|---|---|---|---|---|
| 15 | TEA | 8,0 | 50 | 500 | 384,675 |
| 10 | NaOH | 11,0 | | | 15,212 |

Beispiel 11: Einsatz des Fällverfahrens auf unterschiedliche Polymere

Beispiel 1 wurde mit unterschiedlichen Polymeren wiederholt. Es kamen das Polyimid Matrimid® 5218 und das Polyamid-imid Torlon® 4000T-MV zum Einsatz. Beide Polymere wurden zu 5% (m/m) in DMF gelöst und anschließend gefällt. Zum Einstellen des pH-Wertes auf pH 8,5 wurde Triethylamin als Base verwendet.

Tabelle 10 zeigt die Ergebnisse aus den Korngrößenbestimmungen der Suspensionen.

Tabelle 10:

| Polymerklasse | Polymer | Feststoff [%] | pH-Wert | d(90) [μm] |
|---|---|---|---|---|
| Polyimid | Matrimid® 5218 | 5 | 8,5 | 509,176 |
| Polyamid-imid | Torlon® 4000T-MV | | | 0,834 |

**Patentansprüche**

1. Verfahren zur Herstellung von pulverförmigen Polymeren aus Polymerlösungen,
**dadurch gekennzeichnet,**
**dass** es die folgenden Schritte umfasst:

a) Herstellen einer Polymerlösung umfassend ein Polymer oder Gemisch mehrere Polymere, ausgewählt aus der Gruppe bestehend aus Polyimiden, Polyetherimiden, Polyamidimiden und Polyamiden, und zumindest ein Lösungsmittel für zuvor genanntes Polymer oder Polymergemisch,
b) Zugabe mindestens eines Nichtlösungsmittels bzw. eines Gemisches aus mindestens einem Nichtlösungsmittel und mindestens einem Lösungsmittel, wobei sich die Begriffe Nichtlösungsmittel und Lösungsmittel auf die in Schritt a) genannten Polymere oder Polymergemische beziehen, unter Einwirkung von Stabilisierungsenergie, bevorzugt Scherenergie, zur Lösung aus Schritt a) bis sich eine Suspension bildet,
c) Optional Reduktion des Lösungs- und/oder Nichtlösungsmittelgehalts in der Flüssigphase der Suspension
d) Abtrennen des Pulvers von der Flüssigphase der nach Schritt b) oder c) erhaltenen Suspension
e) Optional trocknen des Pulvers

2. Verfahren nach Anspruch 1,
**dadurch gekennzeichnet,**
**dass** die Polymerlösung während Schritt a), in Schritt a1), modifiziert wird,
wobei Schritt a1) bevorzugt mindestens einen der nachfolgenden Schritte umfasst:

a1.1) Verdünnen der Polymerlösung mit dem bei der Polymerherstellung, bevorzugt der Polykondensation, verwendeten Lösungsmittel oder einem anderen vollständig mischbaren Lösungsmittel
a1.2) Verdünnen der Polymerlösung mit einem vollständig mischbaren Nichtlösungsmittel, wobei bevorzugt bis zu 20% Nichtlösemittel zugemischt werden, sodass noch kein Ausfällen des Polymeren stattfindet
a1.3) Filtrieren zur Abtrennung von Feststoffen aus der Polymerlösung a1.4) Aufkonzentrieren der Polymerlösung
a1.5) Zugabe eines Polymers oder Additivs, das sich in der Polymerlösung löst
a1.6) Zugabe von pulverförmigen Additiven, die sich in der Polymerlösung nicht lösen und in dieser suspendieren bzw. dispergieren lassen
a1.7) Teilweiser oder vollständiger Austausch des Lösungsmittels, durch ein mischbares Lösungsmittel oder Gemisch aus Lösungsmittel- und Nichtlösungsmittel, so dass noch kein Ausfällen des Polymeren stattfindet.

3. Verfahren nach einem der Ansprüche 1 oder 2,
**dadurch gekennzeichnet,**
**dass** Schritt a) mindestens einen der nachfolgenden Verfahrensschritte umfasst:

a2) Homogenisieren der Polymerlösung, bevorzugt durch Eintrag von Scherenergie,
a3) Einstellung der Temperatur Polymerlösung
a4) Einstellung des pH-Wertes Polymerlösung
a5) Einstellung des Feststoffgehalts Polymerlösung.

4. Verfahren nach Anspruch 3,
**dadurch gekennzeichnet,**
**dass** der pH-Wert der Polymerlösung in Schritt a4) durch Zugabe einer Säure oder eines Base eingestellt wird, bevorzugt, dass er auf einen Bereich von 2 bis 10 oder 6 bis 11 eingestellt wird.

**5.** Verfahren nach Anspruch 3 oder 4,
**dadurch gekennzeichnet,**
**dass** der Feststoffgehalt der Polymerlösung in Schritt a1) und/oder Schritt a5) auf 1 bis 50 Gew. %, bevorzugt 1 bis 40 Gew. %, besonders bevorzugt auf 2 bis 30 Gew. %, speziell bevorzugt auf 5 bis 25 Gew. % und ganz speziell bevorzugt 7 bis 20 Gew. % eingestellt wird.

**6.** Verfahren nach einem der Ansprüche 3 bis 5,
**dadurch gekennzeichnet,**
**dass** die Temperatur der Polymerlösung in Schritt a3), d.h. vor oder zu Beginn von Schritt b) und/oder die Temperatur der während Schritt b) erhaltenen Suspension auf einen Bereich von -20 bis 200 °C, bevorzugt 0 und 150 °C, besonders bevorzugt zwischen 20 und 100 °C, speziell bevorzugt zwischen 20 und 80 °C und ganz speziell bevorzugt zwischen 30 und 60 °C eingestellt und/oder gehalten wird.

**7.** Verfahren nach einem der Ansprüche 1 bis 6,
**dadurch gekennzeichnet,**
**dass** der Prozess als nicht kontinuierlicher Prozess durchgeführt und dass in Schritt a2) und/oder b) ein Scheraggregat, bevorzugt ein Propellerrührer, Schrägblattrührer, Scheibenrührer, Taumelscheibenrührer, Hollowbladerührer, Impellerrührer, Kreuzbalkenrührer, Ankerrührer, Blattrührer, Gitterrührer, Gaseinleitungsrührer, Wendelrührer, Zahnscheibenrührer zentrisch mit oder ohne Planetenantrieb und wandgängigem Abstreifer oder ein Ultraschallaggregat verwendet werden
oder
**dass** der Prozess kontinuierlich durchgeführt wird, wobei die Lösung gemäß Schritt a) in Schritt a2) und/oder b) durch ein Aggregat, bevorzugt ein Inline-Dispergierer, Inline Emulsifizierungspumpen geleitet wird, welches Scherenergie in die Lösung einbringt und wobei stromaufwärts und/oder an der Stelle der Scherung der Lösung mindestens ein Nichtlösungsmittel bzw. mindestens ein Gemisch aus Lösungsmittel und Nichtlösungsmittel zudosiert wird.

**8.** Verfahren nach Anspruch 7,
**dadurch gekennzeichnet,**
**dass** in Schritt a2) und/oder b)mit einem Zahnscheibenrührer Energie eingetragen wird, der eine Schergeschwindigkeit der Dispergiereinheit von 0,01 bis 100 m/s, bevorzugt 0,1 bis 30 m/s, besonders bevorzugt 1 bis 30 m/s und ganz besonders bevorzugt 2 bis 20 m/s, aufweist,
oder
**dass** in Schritt a2) und/oder b) mit anderen, diskontinuierlichen oder kontinuierlichen, Aggregaten Energie eingetragen wird, welche ein gleich großes oder größeres Scherfeld aufbauen wie der zuvor definierte Zahnscheibenrührer.

**9.** Verfahren nach einem der Ansprüche 1 bis 8,
**dadurch gekennzeichnet,**
**dass** das Polyimid bzw. das Polyamidimid durch Polykondensation
mindestens eines aromatischen Tetracarbonsäure(di)anhydrids bzw. einer aromatischen Tricarbonsäure, bevorzugt ausgewählt aus der Gruppe bestehend aus 3,4,3'4'-Benzophenontetra-carbonsäuredianhydrid, 1,2,4,5-Benzoltetracarbon-säuredianhydrid, 3,4,3'4'-Biphenyltetracarbon-säuredianhydrid, Oxydiphthalsäuredianhydrid, Sulfonyldiphthalsäuredianhydrid, und 1,1,1,3,3,3-Hexafluor-2,2-propylidendiphthalsäure-dianhydrid, 1,3,4-Benzoltricarbonsäure und
mindestens einem aromatischen Diisocyanat, bevorzugt ausgewählt aus der Gruppe bestehend aus Toluol-2,4-diisocyanat, Toluol-2,6-diisocyanat, 4,4'-Methylendiphenyl-diisocyanat, 2,4,6-Trimethyl-1,3-phenylendi-isocyanat, 2,3,4,5-Tetramethyl-1,4-phenylendi-isocyanat erhalten wird,
oder
**dass** das Polyimid durch Umsetzung mindestens eines Tetracarbonsäure(di)anhydrids, bevorzugt ausgewählt aus der Gruppe bestehend aus 3,4,3'4'-Benzophenontetra-carbonsäuredianhydrid, 1,2,4,5-Benzoltetracarbon-säuredianhydrid, 3,4,3'4'-Biphenyltetracarbon-säuredianhydrid, Oxydiphthalsäuredianhydrid, Sulfonyldiphthalsäuredianhydrid, und 1,1,1,3,3,3-Hexafluor-2,2-propylidendiphthal-säuredianhydrid, 4,4 ' - (4,4 ' - Isopropylidenediphenoxy) Bis (Phthalsäureanhydrid);
und
mindestens einem Diamin, bevorzugt ausgewählt aus der Gruppe, bestehend aus 2,4-Diaminotoluol, 2,6-Diaminotoluol, 4,4'-Diaminodiphenylmethan, 2,4,6-Trimethyl-1,3-phenylendiamin, 2,3,4,5-Tetramethyl-1,4-phenylendiamin, Bis(4-Amino-3,5-dimethyl-phenyl)methan, Bis(4-Amino-3-methyl-phenyl)methan, 1,3-Phenylendiamin, 1,4-phenylendiamin, 4,4'-Diaminodiphenylether, 5(6)-amino-1-(4' aminophenyl)-1,3,-trimethylindane, und anschließender Imidisierung der Polyamidsäure erhalten wird.

**10.** Verfahren nach Anspruch 9,
**dadurch gekennzeichnet,**
**dass** als Polymer ein Polyimid, umfassend

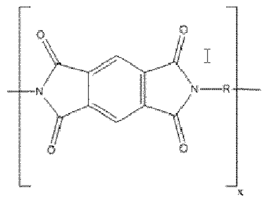

(A)

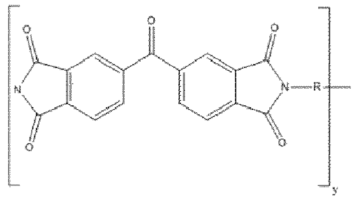

(B)

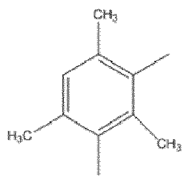

(L1)

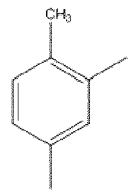

(L2)

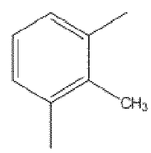

(L3)

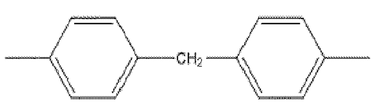

(L4)

wobei $0 \leq x \leq 0{,}5$ und $1 \geq y \geq 0{,}5$ und R einem oder mehreren, identischen oder unterschiedlichen Resten, ausgewählt aus der Gruppe bestehend aus L1, L2, L3 und L4, entspricht; besonders bevorzugt ein Polyimid mit x = 0, y = 1 und R = 64 mol % L2, 16 mol % L3 und 20 mol % L4 oder ein Polyimid mit x = 0,4, y = 0,6 und R = 80 mol % L2 und 20 mol % L3
und/oder
ein Polymer mit der nachfolgenden Struktur

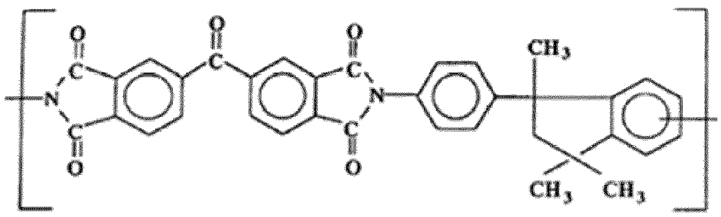

(I)

und/oder ein Polyamidimid ist, mit nachfolgend angeführter Zusammensetzung,

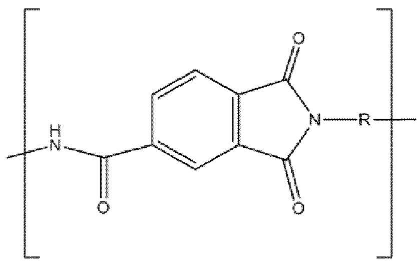

(III)

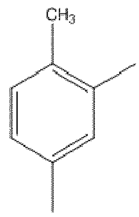

(L2)

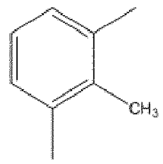

(L3)

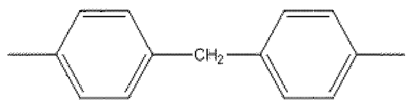

(L4)

wobei der Rest R einem oder mehreren, identischen oder unterschiedlichen Resten, ausgewählt aus der Gruppe bestehend aus L2, L3 und L4, entspricht, verwendet werden.

**11.** Verfahren nach einem der Ansprüche 1 bis 10,
**dadurch gekennzeichnet,**
**dass** mindestens ein mit dem Lösungsmittel, im Verfahren verwendeten Temperaturbereich, vollständig mischbares, Nichtlösungsmittel bzw. Nichtlösungsmittelgemisch(e) verwendet werden.

**12.** Verfahren nach Anspruch 11,
**dadurch gekennzeichnet,**
**dass** ein Lösungsmittel ausgewählt aus der Gruppe bestehend aus Dimethylformamid, Dimethylacetamid, Dimethylpropionamid, N-Methylpyrrolidon, N-Ethylpyrrolidon, Dimethylsulfoxid, Sulfolan, Tetramethylharnstoff, Tetrahydrofuran, 1,4-Dioxan, 1,3-Dioxan, 1,3-Dioxolan, bevorzugt Dimethylformamid, Diemthylacetamid und N-Methylpyrrolidon,, oder Gemischen davon
und

**dass** als Nichtlösungsmittel eine Flüssigkeit ausgewählt aus der Gruppe, bestehend aus Wasser, Alkohole wie Methanol, Ethanol und Isopropanol oder Ketone wie Aceton oder Methylethylketon, bevorzugt Wasser und C1 - C3 Alkohole oder Gemischen davon, verwendet wird.

**13.** Verfahren nach einem der Ansprüche 11 oder 12,
**dadurch gekennzeichnet,**
**dass** in Schritt b) ein Gemisch aus 10 bis 90 Gew. % Lösungsmittel und 90 bis 10 Gew. % Nichtlösungsmittel, bevorzugt aus 20 bis 80 Gew. % Lösungsmittel und 80 bis 20 Gew. % Nichtlösungsmittel und besonders bevorzugt aus 50 bis 75 Gew. % Lösungsmittel und 35 bis 50 Gew. % Nichtlösungsmittel verwendet wird.

**14.** Polymerpartikel,
**dadurch gekennzeichnet,**
**dass** es um ein Polymer oder Gemisch mehrere Polymere, ausgewählt aus der Gruppe bestehend aus Polyimiden, Polyetherimiden, Polyamidimiden und Polyamiden, handelt und dass die Partikel eine in etwa sphärische Struktur aufweisen.

Europäisches Patentamt
European Patent Office
Office européen des brevets

# EUROPÄISCHER RECHERCHENBERICHT

Nummer der Anmeldung
EP 14 19 1602

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2012/245239 A1 (KALYANARAMAN VISWANATHAN [US] ET AL) 27. September 2012 (2012-09-27) * Absätze [0001] - [0161]; Ansprüche 1-33 * | 1-14 | INV. C08J3/12 C08J3/14 C08G73/00 C08G73/10 |
| X | XIONG J ET AL: "Surfactant free fabrication of polyimide nanoparticles", APPLIED PHYSICS LETTERS, AMERICAN INSTITUTE OF PHYSICS, US, Bd. 85, Nr. 23, 1. Januar 2004 (2004-01-01), Seiten 5733-5735, XP012063756, ISSN: 0003-6951, DOI: 10.1063/1.1828598 * das ganze Dokument * | 1-14 | |
| X | EP 2 345 687 A1 (UBE INDUSTRIES [JP]) 20. Juli 2011 (2011-07-20) * Absätze [0001] - [0098]; Ansprüche 1-17 * | 1-14 | |
| X | EP 2 623 542 A1 (TORAY INDUSTRIES [JP]) 7. August 2013 (2013-08-07) * Absätze [0001] - [0287]; Ansprüche 1-19 * | 1-14 | RECHERCHIERTE SACHGEBIETE (IPC): C08J C08G |
| X | EP 2 502 952 A1 (TORAY INDUSTRIES [JP]) 26. September 2012 (2012-09-26) * Absätze [0001] - [0111]; Ansprüche 1-7 * | 1-14 | |
| X | EP 2 287 236 A1 (TORAY INDUSTRIES [JP]) 23. Februar 2011 (2011-02-23) * Absätze [0001] - [0241]; Ansprüche 1-34 * | 1-14 | |

-/--

Der vorliegende Recherchenbericht wurde für alle Patentansprüche erstellt

1

| Recherchenort | Abschlußdatum der Recherche | Prüfer |
|---|---|---|
| München | 11. März 2015 | Ansorge, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 14 19 1602

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/022673 A1 (LIAO CHUN-JEN [TW] ET AL) 21. Februar 2002 (2002-02-21) * Absätze [0001] - [0058]; Ansprüche 1-13 * | 1-14 | |
| X | US 4 089 843 A (RAUSCH JR KARL W) 16. Mai 1978 (1978-05-16) * Spalte 1, Zeile 1 - Spalte 5, Zeile 61; Ansprüche 1-10 * | 1-14 | |
| X | EP 0 336 995 A1 (DU PONT [US]) 18. Oktober 1989 (1989-10-18) * Seite 1, Zeile 1 - Seite 18, Zeile 16; Ansprüche 1-11 * | 1-14 | |
| X | JP 2007 112926 A (TOYO BOSEKI) 10. Mai 2007 (2007-05-10) * Zusammenfassung * | 1-14 | |
| X | JP 2006 233023 A (JAPAN SCIENCE & TECH AGENCY) 7. September 2006 (2006-09-07) * Zusammenfassung * | 1-14 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 11. März 2015 | Ansorge, Markus |

1

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 14 19 1602

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2015

| Im Recherchenbericht angeführtes Patentdokument | Datum der Veröffentlichung | Mitglied(er) der Patentfamilie | Datum der Veröffentlichung |
|---|---|---|---|
| US 2012245239 A1 | 27-09-2012 | KEINE | |
| EP 2345687 A1 | 20-07-2011 | CN 102186906 A | 14-09-2011 |
| | | CN 102977382 A | 20-03-2013 |
| | | EP 2345687 A1 | 20-07-2011 |
| | | KR 20110097758 A | 31-08-2011 |
| | | US 2011263730 A1 | 27-10-2011 |
| | | WO 2010044340 A1 | 22-04-2010 |
| EP 2623542 A1 | 07-08-2013 | CN 103140540 A | 05-06-2013 |
| | | CN 104059236 A | 24-09-2014 |
| | | EP 2623542 A1 | 07-08-2013 |
| | | JP 5403065 B2 | 29-01-2014 |
| | | JP 2014001403 A | 09-01-2014 |
| | | KR 20130124306 A | 13-11-2013 |
| | | TW 201219459 A | 16-05-2012 |
| | | US 2013183528 A1 | 18-07-2013 |
| | | WO 2012043509 A1 | 05-04-2012 |
| EP 2502952 A1 | 26-09-2012 | CN 102597070 A | 18-07-2012 |
| | | EP 2502952 A1 | 26-09-2012 |
| | | JP 5477300 B2 | 23-04-2014 |
| | | KR 20120117738 A | 24-10-2012 |
| | | US 2012237771 A1 | 20-09-2012 |
| | | WO 2011062006 A1 | 26-05-2011 |
| EP 2287236 A1 | 23-02-2011 | AU 2009250453 A1 | 26-11-2009 |
| | | CN 102099400 A | 15-06-2011 |
| | | CN 104109250 A | 22-10-2014 |
| | | EP 2287236 A1 | 23-02-2011 |
| | | JP 5099135 B2 | 12-12-2012 |
| | | JP 5223989 B2 | 26-06-2013 |
| | | JP 5324698 B2 | 23-10-2013 |
| | | JP 5338957 B2 | 13-11-2013 |
| | | JP 5387796 B2 | 15-01-2014 |
| | | JP 2012197460 A | 18-10-2012 |
| | | JP 2012197461 A | 18-10-2012 |
| | | JP 2013076085 A | 25-04-2013 |
| | | JP 2013237857 A | 28-11-2013 |
| | | KR 20110029126 A | 22-03-2011 |
| | | TW 201011062 A | 16-03-2010 |
| | | US 2011070442 A1 | 24-03-2011 |
| | | US 2013337263 A1 | 19-12-2013 |
| | | WO 2009142231 A1 | 26-11-2009 |
| US 2002022673 A1 | 21-02-2002 | TW I232873 B | 21-05-2005 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 14 19 1602

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2015

| Im Recherchenbericht angeführtes Patentdokument | Datum der Veröffentlichung | Mitglied(er) der Patentfamilie | Datum der Veröffentlichung |
|---|---|---|---|
| | | US 2002022673 A1 | 21-02-2002 |
| US 4089843 A | 16-05-1978 | KEINE | |
| EP 0336995 A1 | 18-10-1989 | AU 5672386 A | 30-10-1986 |
| | | CA 1261533 A1 | 26-09-1989 |
| | | CA 1322427 C | 21-09-1993 |
| | | DE 3689596 D1 | 17-03-1994 |
| | | DE 3689596 T2 | 11-08-1994 |
| | | EP 0199364 A2 | 29-10-1986 |
| | | EP 0336995 A1 | 18-10-1989 |
| | | JP 2610826 B2 | 14-05-1997 |
| | | JP S61250030 A | 07-11-1986 |
| | | US 4622384 A | 11-11-1986 |
| JP 2007112926 A | 10-05-2007 | KEINE | |
| JP 2006233023 A | 07-09-2006 | JP 4125296 B2 | 30-07-2008 |
| | | JP 2006233023 A | 07-09-2006 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2012096374 A
- JP 2001163973 A
- JP 2006124530 A
- JP 2011162570 A
- US 4464489 A
- US 20120245239 A
- EP 2345687 A
- EP 2623542 A
- EP 2287236 A
- US 4089843 A
- EP 2502952 A
- US 20020022673 A
- EP 0336995 A
- JP 2007112926 A
- JP 2006233023 A
- US 20060039984 A
- JP 4272934 A
- EP 0279807 A
- WO 2011009919 A

### In der Beschreibung aufgeführte Nicht-Patentliteratur

- **J.Y. XIONG et al.** Surfactant free fabrication of polyimide nanoparticles. *Appl. Phys. Lett.,* vol. 85 (23), 5733-5735